(19) **Europäisches Patentamt / European Patent Office / Office européen des brevets**

(11) **EP 4 566 797 A1**

(12) # EUROPÄISCHE PATENTANMELDUNG

(43) Veröffentlichungstag:
**11.06.2025 Patentblatt 2025/24**

(21) Anmeldenummer: **23214421.2**

(22) Anmeldetag: **05.12.2023**

(51) Internationale Patentklassifikation (IPC):
**B29C 64/153** (2017.01) **B22F 10/31** (2021.01)
**B22F 10/36** (2021.01) **B22F 10/85** (2021.01)
**B29C 64/393** (2017.01) **B33Y 10/00** (2015.01)
**B33Y 30/00** (2015.01) **B33Y 50/02** (2015.01)

(52) Gemeinsame Patentklassifikation (CPC):
**B29C 64/153; B22F 10/31; B22F 10/36;
B22F 10/85; B29C 64/393; B33Y 10/00;
B33Y 30/00; B33Y 50/02;** B22F 10/322;
B29C 64/124; B29C 64/165; B29C 64/364

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **EOS GmbH Electro Optical Systems
82152 Krailling (DE)**

(72) Erfinder:
• **Kunz, Dominik
82131 Gauting (DE)**
• **Krauss, Harald
86368 Gersthofen (DE)**
• **Holfelder-Schwalme, Peter
93342 Saal an der Donau (DE)**

(74) Vertreter: **Beckord & Niedlich Patentanwälte
PartG mbB
Marktplatz 17
83607 Holzkirchen (DE)**

(54) **VERFAHREN UND REGELVORRICHTUNG ZUR REGELUNG EINER BESTRAHLUNG IN EINEM FERTIGUNGSVERFAHREN ZUR ADDITIVEN FERTIGUNG VON OBJEKTEN**

(57) Die Erfindung betrifft ein Verfahren zur Regelung einer Bestrahlung in einem Fertigungsverfahren zur additiven Fertigung von Objekten (2), wobei in einem Baufeld (8) Aufbaumaterial schichtweise in Form von Objektschichten (O), entsprechend Querschnitten der zu fertigenden Objekte (2), mittels Bestrahlung des Aufbaumaterials verfestigt wird, das Verfahren umfassend die Schritte:

- Festlegen einer Mehrzahl von einander in Form und/oder Größe entsprechenden Formbereichen in den zu verfestigenden Objektschichten (O),
- Auswahl einer Anzahl von Referenzbereichen (R) aus der Mehrzahl der Formbereiche, wobei zumindest die übrigen Formbereiche als Korrekturbereiche (K) definiert werden,
- Festlegen einer Anzahl von Soll-Wärmekarten (S) welche eine gewünschte Wärmeverteilung von Korrekturbereichen (K) oder einer Anzahl von Gruppen von Korrekturbereichen (K) vorgeben,
- Verfestigen einer Anzahl ausgewählter Referenzbereiche (R) und Aufnehmen von ortsaufgelösten Wärmedaten (W) der Anzahl von Referenzbereichen (R) bei ihrer Verfestigung,
- Generieren einer Anzahl von Korrekturfaktor-Modulen (F) für die Korrekturbereiche (K) aus den Wärmedaten (W) und den Soll-Wärmekarten (S), wobei jedes Korrekturfaktor-Modul (F) ortsaufgelöste Korrekturfaktoren für Bestrahlungswerte oder ortsaufgelöste korrigierte Bestrahlungswerte angibt und jedem Korrekturbereich (K) ein Korrekturfaktor-Modul (F) zugeordnet ist,
- Verfestigen zumindest der Korrekturbereiche (K) basierend auf dem ihnen jeweils zugeordneten Korrekturfaktor-Modul (F).

Des Weiteren umfasst die Erfindung eine Regelvorrichtung, eine Steuereinrichtung und eine Fertigungsvorrichtung.

FIG 6

**Beschreibung**

Die Erfindung betrifft ein Verfahren und eine Regelvorrichtung zur Regelung einer Bestrahlung in einem Fertigungsverfahren zur additiven Fertigung von Objekten, eine Steuereinrichtung für eine Fertigungsvorrichtung zur additiven Fertigung von Objekten und eine Fertigungsvorrichtung zur additiven Fertigung zumindest eines Objekts in einem additiven Fertigungsprozess.

Bei der Herstellung von Prototypen und inzwischen auch in der Serienfertigung werden additive Fertigungsprozesse immer relevanter. Im Allgemeinen sind unter "additiven Fertigungsprozessen" solche Fertigungsprozesse zu verstehen, bei denen in der Regel auf Basis von digitalen 3D-Konstruktionsdaten durch das Ablagern von Material (dem "Aufbaumaterial") ein Fertigungsprodukt ("Objekt") aufgebaut wird. Der Aufbau erfolgt dabei meist schichtweise. Als ein Synonym für die additive Fertigung wird häufig auch der Begriff "3D-Druck" verwendet, die Herstellung von Modellen, Mustern und Prototypen mit additiven Fertigungsprozessen wird oft als "Rapid Prototyping", die Herstellung von Werkzeugen als "Rapid Tooling" und die flexible Herstellung von Serienbauteilen wird als "Rapid Manufacturing" bezeichnet. Wie eingangs erwähnt, ist ein Kernpunkt die selektive Verfestigung des Aufbaumaterials, wobei diese Verfestigung bei vielen Fertigungsprozessen mit Hilfe einer Bestrahlung mit Strahlungsenergie, z. B. elektromagnetischer Strahlung, insbesondere Licht- und/oder Wärmestrahlung, aber ggf. auch mit Teilchenstrahlung wie z. B. Elektronenstrahlung erfolgen kann.

Beispiele für mit einer Bestrahlung arbeitende Verfahren sind das "selektive Lasersintern" oder "selektive Laserschmelzen". Dabei werden wiederholt dünne Schichten eines meist pulverförmigen Aufbaumaterials übereinander aufgebracht und in jeder Schicht wird das Aufbaumaterial durch räumlich begrenztes Bestrahlen der Stellen, die nach der Fertigung zum herzustellenden Objekt gehören sollen, in einem "Schweißprozess" selektiv verfestigt, indem die Pulverkörner des Aufbaumaterials mit Hilfe der durch die Strahlung an dieser Stelle lokal eingebrachten Energie teilweise oder vollständig aufgeschmolzen werden. Während einer Abkühlung verfestigen diese Pulverkörner dann miteinander zu einem Festkörper. Meist wird dabei der Energiestrahl entlang von Verfestigungsbahnen über das Baufeld geführt und das Umschmelzen bzw. Verfestigen des Aufbaumaterials in der jeweiligen Schicht erfolgt entsprechend in Form von "Schweißbahnen" oder "Schweißraupen", so dass letztlich im Objekt eine Vielzahl solcher aus Schweißbahnen gebildeter Schichten vorliegt. Auf diese Weise können inzwischen Objekte mit sehr hoher Qualität und Bruchfestigkeit hergestellt werden.

Während der Fertigung kann der Fall auftreten, dass die durch den Energiestrahl eingetragene Energie inhomogen vom Objekt aufgenommen wird. Dies äußert sich durch Bereiche einer Objektschicht mit einer inhomogenen Wärmeverteilung. Zuweilen kann es gewünscht sein, ausgesuchte Bereiche mit einem anderen Energieeintrag zu verfestigen, jedoch ist dies in der Regel unerwünscht, insbesondere bei uniformen Flächen oder regelmäßigen Konturen.

Es ist eine Aufgabe der vorliegenden Erfindung, ein Verfahren und eine Regelvorrichtung zur Regelung einer Bestrahlung in einem Fertigungsverfahren zur additiven Fertigung von Objekten anzugeben, welche die Nachteile des Standes der Technik überwinden und insbesondere eine Verbesserung der Qualität von Objekten und eine homogene Qualität der gefertigten Objekte erlauben. Bevorzugt ist eine Aufgabe der Erfindung, die Stabilität des Fertigungsprozesses zu erhöhen und insbesondere einen Abbruch der Fertigung zu verhindern oder zu verhindern, dass es an Stellen mit erhöhter Wärmeentwicklung bzw. - abstrahlung zu Problemen beim Auftrag des Aufbaumaterials kommt.

Diese Aufgabe wird durch ein Verfahren gemäß Patentanspruch 1, eine Regelvorrichtung gemäß Patentanspruch 11, eine Steuereinrichtung gemäß Patentanspruch 13 und eine Fertigungsvorrichtung gemäß Patentanspruch 14 gelöst.

Ein erfindungsgemäßes Verfahren dient zur Regelung einer Bestrahlung in einem Fertigungsverfahren zur additiven Fertigung von Objekten. Dabei wird in einem Baufeld Aufbaumaterial schichtweise in Form von Objektschichten, entsprechend Querschnitten der zu fertigenden Objekte, mittels Bestrahlung des Aufbaumaterials verfestigt. Das Verfahren umfasst die folgenden Schritte:

- Festlegen einer Mehrzahl von einander in Form und/oder Größe entsprechenden Formbereichen in den zu verfestigenden Objektschichten,
- Auswahl einer Anzahl von Referenzbereichen aus der Mehrzahl der Formbereiche, wobei zumindest die übrigen Formbereiche als Korrekturbereiche definiert (bzw. angesehen) werden,
- Festlegen einer Anzahl von Soll-Wärmekarten welche eine gewünschte Wärmeverteilung von Korrekturbereichen oder einer Anzahl von Gruppen von Korrekturbereichen vorgeben,
- Verfestigen einer Anzahl ausgewählter Referenzbereiche und Aufnehmen von ortsaufgelösten Wärmedaten der Anzahl von Referenzbereichen bei ihrer Verfestigung,
- Generieren einer Anzahl von Korrekturfaktor-Modulen für die Korrekturbereiche aus den Wärmedaten und den Soll-Wärmekarten, wobei jedes Korrekturfaktor-Modul ortsaufgelöste Korrekturfaktoren für Bestrahlungswerte oder ortsaufgelöste korrigierte Bestrahlungswerte angibt und jedem Korrekturbereich ein Korrekturfaktor-Modul zugeordnet ist,

- Verfestigen zumindest der Korrekturbereiche basierend auf dem ihnen jeweils zugeordneten Korrekturfaktor-Modul.

Das Verfahren regelt dabei vorteilhaft die Bestrahlung eines Fertigungsverfahrens, indem es die Bestrahlung korrigiert. Eine Korrektur betrifft dabei die in einen Bereich eingebrachte Energie. Ein Korrekturfaktor-Modul kann dabei insbesondere die Intensität einer Bestrahlung und/oder eine Dauer einer Bestrahlung beeinflussen. Wenn anhand der Wärmedaten festgestellt wird, dass ein Bereich (ein Referenzbereich) bei seiner Verfestigung zu viel oder zu wenig Wärme aufgenommen hat, z.B. zu stark oder zu schwach bestrahlt worden ist, oder nach seiner Verfestigung zu schnell oder zu langsam Wärme abgibt, kann die Bestrahlung mittels des Korrekturfaktor-Moduls für andere Bereiche (die Korrekturbereiche) entsprechend angepasst, der Energieeintrag also optimiert werden. Dadurch wird erreicht, dass der Wärmebetrag (also die vom Bauteil oder von einem Bauteilbereich aufgenommene oder abgegebene Wärme) bei der Herstellung des Bauteils ortspezifisch ähnlich bzw. angepasst ist. Ein ähnlicher, insbesondere konstanter, Wärmebetrag führt vorteilhafterweise dazu, dass mechanische Spannungen innerhalb des Bauteils minimiert werden und/oder dass ein homogener (insbesondere gewünschter bzw. minimaler) Porositätsgrad des Bauteils erreicht wird. Darüber hinaus ist ein angepasster Wärmebetrag vorteilhaft, damit unterschiedliche Bauteilbereiche mit unterschiedlichen Eigenschaften gebaut werden können. Unterschiedliche Eigenschaften können z.B. eine mechanische Festigkeit, eine Porosität, ein Gefüge, eine Kristallstruktur oder -phase sein oder betreffen.

Für die Referenzbereiche ist eine Optimierung in dieser Ausführung des erfindungsgemäßen Verfahrens nicht mehr möglich. Da die Objekte Schichtweise aufgebaut werden, ist es aber nicht unbedingt dramatisch, wenn eine Schicht etwas zu heiß oder kalt verfestigt worden ist. Es können aber auch gezielt "Opferobjekte" bestimmt werden, die später ausgesondert werden, und die dann die Referenzbereiche enthalten.

Im Rahmen des Verfahrens werden mehrere "Formbereiche" festgelegt. Diese Formbereiche sind Bereiche in einem zu fertigenden Objekt und/oder in mehreren zu fertigenden Objekten, die einander in Form und/oder Größe entsprechen. Bevorzugt sind sowohl die Form als auch die Größe der Formbereiche zumindest ähnlich.

Das Merkmal, dass zwei Formbereiche einander in Form entsprechen, bedeutet, dass sie bezüglich ihrer Form identisch oder zumindest ähnlich sind. Dabei kann es sich um die geometrische Form der Formbereiche handeln. Beispielsweise sind zwei Formbereiche Polygone und haben identische Form (d.h., sie haben die gleiche Anzahl von Kanten und identische Winkel zwischen zwei aufeinanderfolgenden Kanten). Alternativ sind zwei Formbereiche beispielsweise Polygone und haben eine ähnliche Form (d.h., die Polygone sind kongruent über einen Abschnitt jeweils ihres Umfangs oder die Polygone haben die gleiche Anzahl von Kanten, wobei die Winkel zwischen den Kanten innerhalb eines Intervalls voneinander abweichen).

Das Merkmal, dass zwei Formbereiche einander in Größe entsprechen, bedeutet, dass sie bezüglich ihrer Größe identisch oder zumindest ähnlich sind. Dabei kann die Größe eines Formbereichs seine, insbesondere geometrische, Fläche sein. Zwei Formbereiche haben beispielsweise identische Größe, wenn ihre Fläche identisch ist oder zwei Formbereiche haben eine ähnliche Größe, wenn ihre Fläche innerhalb eines Intervalls unterschiedlich ist. Zwei Formebereiche können in Form aber nicht in Größe entsprechen, oder andersherum. Es ist aber auch möglich, dass die Formbereiche in Form und Größe entsprechen, d.h., dass sie bezüglich ihrer Form und/oder Größe identisch oder zumindest ähnlich sind.

Wie eingangs erwähnt werden die Formbereiche in den Objektschichten festgelegt. Dabei können Objektschichten von verschiedenen Objekten als Formbereiche festgelegt werden. Darüber hinaus ist es insbesondere möglich, dass Objektschichten von identischen Objekten als Formbereiche festgelegt werden. Es sollte in diesem Fall beachtet werden, dass es nicht zwingend notwendig ist, dass die Objekte alle in ein und demselben Fertigungsvorgang gefertigt werden müssen. Die Wärmedaten von Referenzbereichen und auch Korrekturfaktor-Module in einem Fertigungsvorgang können durchaus auch für weitere Fertigungsvorgänge verwendet werden. Beim Festlegen der Formbereiche in den Objektschichten können auch Teile der Objektschichten als Formbereiche festgelegt werden. In diesem Fall können Teile von verschiedenen Objektschichten (also von Objektschichten aus verschiedenen Objekten) als Formbereiche festgelegt werden. Es ist auch möglich, dass mehrere Teile einer selben Objektschicht und ggf. gleichzeitig Teile von anderen Objektschichten als Formbereiche festgelegt werden. In einem Beispiel können die Teilbereiche Bereiche ein und desselben Objekts sein, z.B. die Zacken eines Sterns.

Es sollte auch beachtet werden, dass zwar am Anfang des Verfahrens Formbereiche festgelegt werden müssen, damit Referenzbereiche ausgewählt werden können, aber durchaus auch noch später, nach der Verfestigung von Formbereichen weitere Formbereiche festgelegt werden können.

Dazu sollte insbesondere beachtet werden, dass Formbereiche nicht unbedingt auf dieselbe Schicht festgelegt sein müssen (auch wenn dies eine bevorzugte Ausführungsform darstellt). Es kann vorkommen, dass identische Objekte in der Höhe zueinander verschoben sind oder dass identische Formbereiche in einem Objekt in unterschiedlichen Höhen vorkommen.

Es kann auch unterschiedliche Gruppen von Formbereichen geben. Dann kann das Verfahren für jede Gruppe ausgeführt werden, indem Referenzbereiche für jede Gruppe ausgewählt werden und die Korrekturfaktor-Module für die jeweilige Gruppe aus den Wärmedaten für diese Referenzbereiche erstellt werden.

Es sollte beachtet werden, dass nicht unbedingt alle Bereiche, die sich in Form und/oder Größe ähneln, den Formbereichen zugeordnet werden müssen. Beispielsweise können bei vielen identischen Objekten ein Teil der Objekte einfach bei dem Verfahren ignoriert werden. Dennoch kann man sich weiterhin zum besseren Verständnis vorstellen, dass mehrere identische Objekte geformt werden sollen und die identischen Schichten dieser Objekte Formbereiche einer Gruppe darstellen.

Es sollte auch beachtet werden, dass nicht unbedingt alle Bereiche, die sich in Form und/oder Größe ähneln einer Gruppe von Formbereiche zugeordnet werden müssen. Beispielsweise können Formbereiche einer Schicht einer Gruppe von Formbereichen zugeordnet werden und (zu diesen Formbereichen) identische Formbereiche einer anderen Schicht einer anderen Gruppe von Formbereichen zugeordnet werden.

Aus den festgelegten Formbereichen wird mindestens ein Referenzbereich ausgewählt. Dieser Referenzbereich ist ein Bereich, in dem die Wärmedaten gemessen werden. In einem einfachen Beispiel kann man sich vorstellen, dass zumindest ein Referenzbereich verfestigt wird, dann (oder währenddessen) dessen Wärmeverteilung gemessen wird, z.B. durch die Aufnahme einer IR-Kamera, und dann daraus die Korrekturfaktor-Module zur Korrektur der Korrekturbereiche ermittelt werden.

"Referenzbereiche" und "Korrekturbereiche" sind beides Formbereiche. Ein Formbereich ist immer ein Korrekturbereich und/oder ein Referenzbereich. Bevorzugt wird jeder andere Bereich nicht als Formbereich angesehen (auch wenn er in Form und/oder Größe ähnlich ist), da er von dem Verfahren nicht berücksichtigt wird. Ein Formbereich, dessen Wärmedaten gemessen werden ist ein Referenzbereich, ein Formbereich, dessen Verfestigung korrigiert wird, ist ein Korrekturbereich. Ein Formbereich, dessen Verfestigung korrigiert wird und dessen Wärmedaten dabei gemessen werden ist sowohl ein Referenzbereich als auch ein Korrekturbereich.

Ein Formbereich kann also durchaus sowohl Korrekturbereich als auch Referenzbereich sein, z.B. in dem Fall, dass ein erster Referenzbereich gewählt wird, aus dessen Wärmedaten ein Korrekturfaktor-Modul ermittelt wird, damit ein Korrekturbereich korrigiert wird und dieser Korrekturbereich dann als neuer Referenzbereich definiert wird, um mit dessen Wärmedaten für eine weitere, verbesserte Korrektur ein weiteres Korrekturfaktor-Modul zu ermitteln. Somit müssen die Referenzbereiche nicht unbedingt alle am Anfang ausgewählt werden, jedoch muss ein Referenzbereich vor der Korrektur des ersten Korrekturbereichs ausgewählt sein und der letzte Referenzbereich sollte spätestens vor der Korrektur des letzten Korrekturbereichs ausgewählt sein.

Hierzu sei jedoch angemerkt, dass mit der Fertigung einer Objektserie die Festlegung von Formbereichen und die Auswahl von Referenzbereichen nicht unbedingt abgeschlossen sein muss. Wenn einige Zeit später eine neue Serie von (identischen oder ähnlichen) Objekten gefertigt werden soll, können die vorangehend ermittelten Korrekturfaktor-Module durchaus verwendet werden. Es können in der neuen Serie auch wieder Referenzbereiche ausgewählt werden, um zu ermitteln, ob die "alten" Korrekturfaktor-Module angewandt werden können.

Zur Ermittlung der Korrekturfaktor-Module benötigt man nicht nur die Wärmedaten der Referenzbereiche (sozusagen ein potentieller "ist"-Zustand), sondern auch Informationen über einen gewünschten Zustand, insbesondere über einen gewünschten Zustand für einen Korrekturbereich. Erfindungsgemäß wird zumindest ein Korrekturbereich definiert und der gewünschte Zustand (sozusagen ein zu erreichender "soll"-Zustand) des Korrekturbereichs wird durch die (zweidimensionalen) Soll-Wärmekarten dargestellt bzw. festgelegt. Die Soll-Wärmekarte stellt bevorzugt eine nicht uniforme Werteverteilung dar. Weiter bevorzugt ist die Soll-Wärmekarte zweidimensional und die Werte (zu Zwecken der Klarheit werden die Werte der Soll-Wärmekarte im Folgenden auch "Soll-Wärmewerte" genannt) sind in der Soll-Wärmekarte ortspezifisch angegeben. Dies bedeutet, dass eine Korrespondenz zwischen einem Soll-Wärmewert und einer Position in einer Objektschicht gegeben ist bzw. rekonstruiert werden kann. Das wird im Folgenden auch so ausgedrückt, dass eine Soll-Wärmekarte ortspezifisch ist oder dass eine ortspezifische Soll-Wärmekarte bereitgestellt oder vorhanden ist. Jedoch ist auch eine uniforme Verteilung der Soll-Wärmewerte in der Soll-Wärmekarte möglich. Eine Soll-Wärmekarte kann insbesondere aus einem einzigen Wert (Soll-Wärmewert) bestehen.

Ein Soll-Wärmewert ist vorzugsweise ein skalarer Wert, der einen Wärmebetrag darstellt. Ein Wärmebetrag kann, insbesondere wenn als skalarer Wert abgebildet, ein Integral unter einer Wärmestrahlungskurve bzw. -spektrum oder eine Temperatur sein. Darüber hinaus kann ein Soll-Wärmewert ein absoluter oder ein relativer Wert sein, wobei ein relativer Soll-Wärmewert sich auf eine Änderung im Vergleich zu einem anderen Soll- Wärmewert oder auf einen vorgegebenen Soll-Wert (bspw. ein Kalibrierungswert) beziehen kann. Ein absoluter Wärmewert kann z.B. eine absolute Temperatur sein oder ein Wärme- oder Energiebetrag in $J/mm^2$. Ein relativer Wärmewert ist z.B. eine Temperaturdifferenz. Insbesondere kann eine Soll-Wärmekarte aus sogenannten "Grauwerten" bestehen. Ein Grauwert ist ein Indikator für eine Wärmestrahlung (IR- Strahlung), der mit einer Temperatur beispielweise basierend auf einer Kalibrierung korreliert werden kann. Ein Grauwert kann aus einem elektrischen Signal resultieren, z.B. wenn die Wärmestrahlung mit einer CCD- oder CMOS-Kamera aufgenommen wird, und kann z.B. auf der Basis einer Kalibrierung mit einem Wärmebetrag und/oder mit einer Temperatur korreliert werden. Beispielsweise können die Grauwerte einer absoluten oder relativen Temperatur oder ein absolutem oder relativem Wert für einen Wärmebetrag, bspw. ein skalarer Wert als Integral unter einer Wärmestrahlungskurve bzw. -spektrum, entsprechen.

Eine Soll-Wärmekarte wird vorzugsweise für einen Korrekturbereich festgelegt. Dies bedeutet, dass jedem Korrekturbereich eine individuelle Soll-Wärmekarte zugeordnet sein kann. Alternativ kann einer Gruppe von Korrekturbereichen oder allen Korrekturbereichen eine Soll-Wärmekarte zugeordnet sein. Bei identischen Objekten kann Korrekturbereichen aller Objekte eine einzige Soll-Wärmekarte zugeordnet sein. Im zweidimensionalen Falle einer Soll-Wärmekarte können für identische Objekte identische Soll-Wärmekarten vorhanden sein. Wenn Soll-Wärmekarten von identischen Objekten aus einem einzigen Wert (Soll-Wärmewert) bestehen, kann dieser Wert gleich für alle identischen Objekte sein. Dieser Wert kann z.B. nur eine einzige Zieltemperatur oder ein einziger Zielwärmebetrag sein. Darüber hinaus können aber auch unterschiedlichen Objekten unterschiedliche Soll-Wärmekarten zugeordnet sein. Wie bereits erwähnt, können die Soll-Wärmewerte einer Soll-Wärmekarte ortspezifisch sein. Eine ortspezifische Soll-Wärmekarte kann für einen Korrekturbereich so festgelegt werden, dass eine Korrespondenz zwischen einem Soll-Wärmewert der Soll-Wärmekarte und einer Position im Korrekturbereich gegeben ist bzw. rekonstruiert werden kann.

Bei einer ortspezifischen Soll-Wärmekarte können die Soll-Wärmewerte so verteilt werden, dass ihre Verteilung bestimmte Bereiche im Korrekturbereich berücksichtigt. Vorzugsweise ist es möglich Bereiche innerhalb eines Korrekturbereichs zu definieren, die anders korrigiert werden sollen als andere Bereiche eines Korrekturbereichs. z.B. kann es vorteilhaft sein, Randbereiche oder kleine Strukturen in einem Korrekturbereich anders zu korrigieren als große und/oder zentrale Flächen.

Wie bereits angedeutet wurde können die vorangehend beschriebenen Dinge (Formbereiche, Referenzbereiche, Soll-Wärmekarten) alle am Anfang des Verfahrens festgelegt werden.

Für den Teil, bei dem Referenzbereiche einer Schicht verfestigt und Wärmedaten aufgenommen werden, müssen jedoch im Grunde nur die zu verfestigenden Referenzbereiche bekannt sein. Dies muss nicht unbedingt alles vor der ersten Korrektur geschehen. Wie oben bereits angedeutet wurde, kann durchaus ein Referenzbereich verfestigt und dessen Wärmedaten für eine Korrektur verwendet werden, dann weitere Referenzbereiche verfestigt (ggf. auch korrigiert) und weitere Wärmedaten aufgenommen werden.

Die Wärmedaten sind ortsaufgelöst. Das heißt, dass in einem Referenzbereich mehrere Wärmewerte an unterschiedlichen Positionen gemessen und diesen Positionen zugeordnet werden. Bevorzugt ist diesbezüglich ein Graustufen-Bild, welches mit einer IR-Kamera aufgenommen wird. Das mit der IR-Kamera aufgenommene Graustufen-Bild entspricht einer Wärmeverteilung und/oder einer Temperatur; d.h. eine (jede) Position im Graustufen-Bild gibt einen Wärmebetrag und/oder Temperatur aus einer entsprechenden Position im Referenzbereich wieder. Der Wärmebetrag und die Temperatur können wie bereits beschrieben als absoluter oder relativer Wert aufgenommen bzw. abgebildet werden. Beispielweise können im Graustufen-Bild absolute oder relative Temperaturen oder ein absoluter oder relativer Wert, bspw. ein skalarer Wert als Integral unter einer Wärmestrahlungskurve bzw. einem Wärmestrahlungsspektrum, abgebildet werden. Beispielsweise kann ein Wärmebetrag mit Grauwerten abgebildet werden.

Die Wärmedaten werden bei der Verfestigung eines Referenzbereichs gemessen. Dies bedeutet (direkt) nach oder während der Verfestigung. Eine Aufnahme während der Verfestigung ergibt genauere Werte, da die zuerst verfestigten Bereiche vor ihrer Auskühlung aufgenommen werden. Es kann also zusammenfassend gesagt werden, dass die Wärmedaten im Grunde die Wärmeverteilung der Referenzbereiche wiedergeben.

Hat man nun Wärmedaten mindesten eines Referenzbereichs (den Ist-Zustand) und die Soll-Wärmekarten, so kann ein Korrekturfaktor-Modul berechnet werden. Dies kann einfach so erfolgen, dass in einen Korrekturbereich, an Stellen in denen der Referenzbereich zu heiß war (die Wärmedaten dort lagen über den entsprechenden Wärmewerten der Soll-Wärmekarten) weniger Wärme eingebracht wird und dort, wo Stellen des Referenzbereichs zu kalt waren (die Wärmedaten dort lagen unter den entsprechenden Wärmewerten der Soll-Wärmekarten) mehr Wärme eingebracht wird. Eine passende Berechnung eines Korrekturfaktor-Moduls kann mittels Versuchen einfach ermittelt werden.

Ein Korrekturfaktor-Modul gibt dabei ortsaufgelöste Korrekturfaktoren für Bestrahlungswerte an, also Faktoren mit denen vorgegebene Bestrahlungswerte verrechnet (z.B. multipliziert) werden, um korrigierte Bestrahlungswerte zu erhalten. Alternativ gibt ein Korrekturfaktor-Modul auch bereits ortsaufgelöste korrigierte Bestrahlungswerte an.

Jedem Korrekturbereich muss ein Korrekturfaktor-Modul zugeordnet sein, damit eine Korrektur durchgeführt werden kann.

Die Korrekturbereiche werden dann basierend auf dem ihnen jeweils zugeordneten Korrekturfaktor-Modul verfestigt.

Eine erfindungsgemäße Regelvorrichtung dient zur Regelung einer Bestrahlung in einem Fertigungsverfahren zur additiven Fertigung von Objekten. Dabei wird in einem Baufeld Aufbaumaterial schichtweise in Form von Objektschichten entsprechend Querschnitten der zu fertigenden Objekte mittels Bestrahlung des Aufbaumaterials verfestigt. Die Regelvorrichtung umfasst die folgenden Komponenten:

- eine Vorgabe-Einheit ausgelegt zum

i) Festlegen einer Mehrzahl von einander in Form und/oder Größe entsprechenden Formbereichen in den zu verfestigenden Objektschichten,
ii) Auswahl einer Anzahl von Referenzbereichen aus der Mehrzahl der Formbereiche, wobei die übrigen Formbereiche als Korrekturbereiche definiert werden,

iii) Festlegen einer Anzahl von Soll-Wärmekarten welche eine gewünschte Wärmeverteilung von Korrekturbereichen oder einer Anzahl von Gruppen von Korrekturbereichen vorgeben,

- eine Sensoreinheit ausgelegt zum Aufnehmen von ortsaufgelösten Wärmedaten der Anzahl von Referenzbereichen bei ihrer Verfestigung,
- eine Korrekturmodul-Einheit ausgelegt zum Generieren einer Anzahl von Korrekturfaktor-Modulen für die Korrekturbereiche aus den Wärmedaten und den Soll-Wärmekarten, wobei jedes Korrekturfaktor-Modul ortsaufgelöste Korrekturfaktoren für Bestrahlungswerte oder ortsaufgelöste korrigierte Bestrahlungswerte angibt und jedem Korrekturbereich ein Korrekturfaktor-Modul zugeordnet ist,
- eine Steuerdateneinheit ausgelegt zum Erzeugen und Ausgeben von Steuerdaten zum Verfestigen zumindest der Korrekturbereiche basierend auf dem ihnen jeweils zugeordneten Korrekturfaktor-Modul.

Die Regelvorrichtung ist bevorzugt zur Ausführung eines erfindungsgemäßen Verfahrens ausgelegt. Die Funktion der Komponenten der Vorrichtung wurde bereits vorangehend beschrieben.

Die Vorgabe-Einheit kann durchaus mehrere unterschiedliche Untereinheiten aufweisen, die die unterschiedlichen Aufgaben erfüllen. Diese Untereinheiten können dabei alleine aufgrund ihrer Funktion des Festlegens bzw. Auswählens der Vorgabe-Einheit zugeordnet sein.

Die Sensoreinheit ist bevorzugt eine Infrarotkamera, kann aber auch ein anderer Wärmesensor sein. Es ist nicht unbedingt notwendig, dass die Sensoreinheit eine absolute Temperatur angeben kann (z.B. wenn das Ziel des Verfahrens lediglich eine Homogenisierung des Wärmeeintrags ist), jedoch ist es von Vorteil, wenn die Sensoreinheit kalibriert ist, also z.B. bestimmten Grautönen eines Graustufen-Bildes einer IR-Kamera konkrete Temperaturen zugeordnet sind.

Die Korrekturmodul-Einheit kann eine einfache Recheneinheit sein, sie kann aber auch dazu ausgelegt sein, Steuerbefehl-Teile für eine Bestrahlung zur additiven Fertigung von Objekten basierend auf der Anzahl von Korrekturfaktor-Modulen zu generieren.

Die Steuerdateneinheit ist dazu ausgelegt, einer Steuereinrichtung für eine additive Fertigung von Objekten erzeugte Steuerdaten zur Verfügung zu stellen.

Eine erfindungsgemäße Steuereinrichtung für eine Fertigungsvorrichtung zur additiven Fertigung von Objekten umfasst eine Regelvorrichtung gemäß der Erfindung. Alternativ oder zusätzlich ist sie dazu ausgebildet, die Fertigungsvorrichtung gemäß einem Verfahren gemäß der Erfindung anzusteuern.

Eine erfindungsgemäße Fertigungsvorrichtung dient zur additiven Fertigung zumindest eines Objekts in einem additiven Fertigungsprozess. Grundsätzlich sind Fertigungsvorrichtungen zur additiven Fertigung bekannt und umfassen zumindest eine Bestrahlungsvorrichtung, um Aufbaumaterial durch Bestrahlung mit zumindest einem Energiestrahl schichtweise zu verfestigen. Die erfindungsgemäße Fertigungsvorrichtung umfasst zusätzlich eine Steuereinrichtung gemäß der Erfindung.

Die Erfindung kann insbesondere in Form einer Rechnereinheit mit geeigneter Software realisiert sein. Die Rechnereinheit kann z.B. hierzu einen oder mehrere zusammenarbeitende Mikroprozessoren oder dergleichen aufweisen. Insbesondere kann sie in Form von geeigneten Softwareprogrammteilen in der Rechnereinheit realisiert sein. Eine softwaremäßige Realisierung hat den Vorteil, dass auch schon bisher verwendete Rechnereinheiten auf einfache Weise durch ein Software- bzw. Firmware-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung einer Rechnereinheit ladbar ist, mit Programmabschnitten, um alle Schritte des erfindungsgemäßen Verfahrens auszuführen, wenn das Programm in der Rechnereinheit ausgeführt wird. Ein solches Computerprogrammprodukt kann neben dem Computerprogramm gegebenenfalls eine Dokumentation und/oder zusätzliche Komponenten, auch Hardware-Komponenten, wie z.B. Hardware-Schlüssel (Dongles etc.) zur Nutzung der Software, umfassen.

Zum Transport zur Rechnereinheit und/oder zur Speicherung an oder in der Rechnereinheit kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Bevorzugt sind Referenzbereiche und Korrekturbereiche Formbereiche von unterschiedlichen Objekten. Alternativ oder zusätzlich liegen Referenzbereiche und Korrekturbereiche in demselben Objekt, wobei dann bevorzugt Referenzbereiche von direkt übereinanderliegenden Schichten nicht überlappen, damit Wärmedaten eines Referenzbereichs nicht von einer unkorrigierten Schicht darunter verfälscht werden.

Es ist bevorzugt, dass bei einer Ausführungsform des Verfahrens eine Mehrzahl von Gruppen von Formbereichen in unterschiedlichen Schichten festgelegt werden und für jede Gruppe von Formbereichen die Verfahrensschritte durchgeführt werden. Es werden dabei bevorzugt in S übereinanderliegenden Schichten jeweils Gruppen von Formbereichen festgelegt, so dass bevorzugt eine Mehrzahl von Formbereichs-Stapeln vorliegt, welche aus übereinanderliegenden Formbereichen unterschiedlicher Gruppen von Formbereichen gebildet werden. Bei identischen Objekten könnten die Formbereichs-Stapel die Objektschichten sein, aber auch Bereiche in ein und demselben Objekt.

Bevorzugt können bei einer Verfestigung eines Referenzbereichs neben den Wärmedaten noch weitere Daten aufgenommen werden, insbesondere zu Gasströmungen oder Sauerstoffkonzentrationen.

Wie oben angemerkt wurde, ist es möglich, während oder nach einer Verfestigung eines Bereichs weitere Formbereiche (Korrekturbereiche und/oder Referenzbereiche) festzulegen, insbesondere in Abhängigkeit eines beobachteten Prozessverlaufs. Es kann dabei vorteilhaft sein, eine Korrektur erst vorzunehmen, wenn eine Prozessabweichung oder Irregularität erkannt worden ist. Dazu ist bevorzugt, zunächst aus den festgelegten Formbereichen einen Referenzbereich auszuwählen, zu verfestigen, Wärmedaten aufzunehmen und diese mit einer Soll-Wärmekarte zu vergleichen. Stimmen die Wärmedaten in einem festgelegten Rahmen mit der Soll-Wärmekarte überein, so erfolgt keine Korrektur und es wird ein nächster Formbereich als Referenzbereich ausgewählt. Dies erfolgt so lange, bis eine die Wärmedaten nicht mehr in dem festgelegten Rahmen liegen, also von der Soll-Wärmekarte abweichen. Dann können nachfolgend verfestigte Formbereiche als Korrekturbereiche korrigiert werden. Es kann dabei insbesondere eine Mehrzahl von Formbereichen sukzessive festgelegt werden, also der nächste Formbereich nach Verfestigung eines Referenzbereichs. Wenn dann bei der Verfestigung eines Bereichs festgestellt wird, dass eine Korrektur nötig ist. Dann wird nach ähnlichen (nicht verfestigten) Bereichen in den zu verfestigenden Objekten gesucht, welche dann eine Formbereichs-Gruppe darstellen. Der verfestigte Bereich ist dann ein Referenzbereich dieser Formbereichs-Gruppe.

Bevorzugt werden aus jeder Gruppe von Formbereichen (Formbereichs-Gruppen) mehrere Formbereiche in N Objekten, insbesondere N Formbereichs-Stapel, ausgewählt und aus den ausgewählten Formbereichen in jeder Schicht (wechselnd bzw. reihum) M Referenzbereiche ausgewählt mit M < N. In den Gruppen können die M jeweils unterschiedlich sein so dass im Grunde eine Anzahl von N $M_i$-Werten vorliegt (i= 1, 2, ..., N).

Bevorzugt entsprechen die ausgewählten Formbereiche, insbesondere die Formbereichs-Stapel, den Objektschichten eines Objekts. Alternativ oder zusätzlich wird ein Objekt bevorzugt in mehrere Formbereichs-Stapel unterteilt.

Es ist bevorzugt, dass für eine aktuelle Schicht (also insbesondere für mehrere in dieser Schicht liegende Objektschichten) eine Mehrzahl von Referenzbereichen aus den Formbereichen der Schicht ausgewählt wird und Wärmedaten dieser Referenzbereiche aufgenommen werden. Es können auch alternativ oder zusätzlich Wärmedaten von Referenzbereichen von einer Anzahl von Schichten unter der aktuellen Schicht bereitgestellt werden. Im Grunde können ältere Wärmedaten berücksichtigt werden, selbst wenn sie nicht aus dem aktuellen Fertigungsvorgang stammen. Es ist jedoch bevorzugt stets (zumindest teilweise) Wärmedaten aus dem aktuellen Fertigungsvorgang zu berücksichtigen, da sich Fertigungsvorgänge systematisch unterscheiden können, z.B. durch unterschiedliche äußere Faktoren. Aus den vorgenannten Wärmedaten und den betreffenden Soll-Wärmekarten werden dann Korrekturfaktor-Module für die Korrekturbereiche der aktuellen Schicht generiert.

Es werden hier also Wärmedaten von unterschiedlichen Referenzbereichen verwendet. Diese können aus unterschiedlichen Referenzbereichen derselben Schicht stammen oder aus unterschiedlichen Schichten. In diesem Fall ist bevorzugt, dass ein (vorzugsweise gewichteter) Mittelwert aus den Wärmedaten berechnet wird. Es ist alternativ bevorzugt, dass zunächst mehrere Korrekturfaktor-Module für unterschiedliche Wärmedaten berechnet werden und aus diesen Korrekturfaktor-Modulen ein, vorzugsweise gewichteter, Mittelwert berechnet wird.

Bevorzugt kann die Soll-Wärmekarte für einen Korrekturbereich von Wärmedaten von einem Referenzbereich abhängen. Dies wäre z.B. der Fall, wenn lediglich eine Homogenisierung der Wärmeverteilung erfolgen soll. Es könnte dann z.B. ein Wert der Wärmedaten ausgewählt werden, z.B. der minimale Wert, der maximale Wert oder ein Mittelwert und die Soll-Wärmekarte wäre dann dieser ausgewählte Wert oder eine vorgegebene Werteverteilung basierend auf diesem Wert.

Gemäß einer bevorzugten Ausführungsform des Verfahrens wird ein Korrekturfaktor-Modul KFM für einen Korrekturbereich KB mittels einer Korrekturfunktion f aus den Wärmedaten $WD(RB_i)$ einer Anzahl von n Referenzbereichen $RB_i$ und der Soll-Wärmekarte SW(KB) für diesen Korrekturbereich KB nach KFM(KB) = f(WD(RB_1), WD(RB_2),... WD(RB_n), SW(KB)) ermittelt. Das Korrekturfaktor-Modul kann diese Korrekturfunktion sein oder umfassen oder kann eine Anweisung sein, die Korrekturfunktion zur Korrektur zu verwenden. Für ein gutes Verständnis kann man sich vorstellen, dass das Korrekturfaktor-Modul durch die Korrekturfunktion definiert wird. Bei der Generierung des Korrekturfaktor-Moduls wird bevorzugt die Korrekturfunktion dermaßen angepasst, dass sich bei einer Eingabe der betrachteten Wärmedaten und Soll-Wärmekarten in die Korrekturfunktion die entsprechenden Korrekturfaktoren für die Bestrahlung ergeben.

Es ist dabei bevorzugt, dass für unterschiedliche Korrekturbereiche (an unterschiedlichen Positionen, z.B. in unterschiedlichen Reihen auf dem Baufeld) unterschiedliche Korrekturfunktionen f (also damit auch unterschiedliche Korrekturfaktor-Module) verwendet werden. Die Korrekturfunktionen können dabei durchaus ortsabhängig sein. Die Verwendung von verschiedenen Korrekturfunktionen für unterschiedliche Korrekturbereiche ist besonders vorteilhaft, wenn unterschiedliche Bereiche voneinander unterschiedlich korrigiert werden. Es ist möglich, dass Korrekturbereichen, die sich an unterschiedlichen Positionen auf dem Baufeld befinden, je nach ihrer Position auf dem Baufeld anders korrigiert werden. Das kann z. B. mit einer Gastromrichtung oder Gasverteilung und/oder mit einer Temperaturverteilung und/oder mit der Wärmeverteilung oder -ableitung im Bauteil zusammenhängen. Es ist auch möglich, dass unterschiedliche Korrekturbereiche an unterschiedliche Positionen in einer Objektschicht befinden (eine Objektschicht ist in diesem Fall in mehrere Korrekturbereiche unterteilt) und dass je nach ihrer Position in der Objektschicht die unterschiedlichen Korrekturbereiche anders korrigiert werden. In diesen Fällen können für unterschiedliche Korrekturbereiche unterschiedliche Korrekturfunktionen f verwendet werden, damit für unterschiedliche Korrekturbereiche unterschiedliche Korrekturfaktor-Module ermittelt werden (d.h., damit unterschiedliche Korrekturbereiche individuell korrigiert werden).

Bevorzugt werden also Korrekturbereichen, insbesondere in unterschiedlichen Reihen auf einem Baufeld, unterschiedliche Soll-Wärmekarten zugeordnet. Alternativ oder zusätzlich werden für diese unterschiedlichen Korrekturbereiche unterschiedliche Korrekturfaktor-Module verwendet. Es ist dabei bevorzugt, dass die Zuordnung einer Soll-Wärmekarte zu einem Korrekturbereich und/oder die Verwendung eines Korrekturfaktor-Moduls für einen Korrekturbereich von einer Gastromrichtung und/oder Gasverteilung und/oder einer Temperaturverteilung der Umgebung und/oder von einer Wärmeverteilung oder -ableitung im Objekt abhängt.

Alternativ oder zusätzlich ist bevorzugt, dass eine Korrekturfunktion f zusätzlich von Wärmedaten eines Korrekturbereichs abhängt, der zusätzlich (z.B. nachträglich) als Referenzbereich festgelegt wurde. Dabei ist es möglich, dass für einen Korrekturbereich ein Korrekturfaktor-Modul basierend auf Wärmedaten aus einem Referenzbereich und aus einer Soll-Wärmekarte für den Korrekturbereich ermittelt wird und der Korrekturbereich entsprechend dem Korrekturfaktor-Modul verfestigt wird. Bei der Verfestigung des Korrekturfaktor-Moduls können Wärmedaten aufgenommen werden und diese Wärmedaten können für die Ermittlung eines Korrekturfaktor-Moduls für einen anderen Korrekturbereich verwendet werden. Dies bedeutet, dass der Korrekturbereich für einen anderen Korrekturbereich als Referenzbereich festgelegt wird.

Alternativ oder zusätzlich ist bevorzugt, dass die Wärmedaten unterschiedlicher Referenzbereiche in einer Korrekturfunktion unterschiedlich gewichtet werden. Eine Gewichtung der Wärmedaten in einer Korrekturfunktion kann durch Gewichtungsfaktoren erfolgen, z.B. kann den Wärmedaten abhängig von ihrem Referenzbereich ein Gewichtungsfaktor zugeordnet werden. Die Korrekturfunktion kann von diesen Gewichtungsfaktoren abhängen und/oder können die Wärmedaten bzw. ihre Werte durch die Gewichtungsfaktoren modifiziert (multipliziert) werden. Es ist möglich, dass Wärmedaten aus Korrekturbereichen, die sich an unterschiedlichen Positionen auf dem Baufeld befinden, Gewichtungsfaktoren ja nach der Position des den Wärmedaten entsprechenden Referenzbereichs auf dem Baufeld zugeordnet werden. Das kann bspw. mit einer Gastromrichtung oder -verteilung und/oder mit einer Temperaturverteilung und/oder mit der Wärmeverteilung oder -ableitung im Bauteil zusammenhängen. Es ist auch möglich, dass die Gewichtungsfaktoren den Wärmedaten je nach der Reihenfolge, in der die den Wärmedaten entsprechenden Referenzbereiche verfestigt werden, zugeordnet werden.

Beispielsweise kann angenommen werden, dass der Referenzbereich $RB_1$ von Objekt 1 und die Korrekturbereiche $KB_2$ und $KB_3$ von den (form- und/oder größengleichen) entsprechenden Objekten 2 und 3 in der gleichen Schicht liegen. Das Korrekturfaktor-Modul (KFM) für die Korrekturbereiche $KB_2$ und $KB_3$ könnte in einem einfachen Fall ein und dasselbe sein und von den Wärmedaten (WD) aus dem Referenzbereich $RB_1$ und einer gemeinsamen Soll-Wärmekarte (SW) abhängen. Es ergibt sich:

$$KFM(KB_2) = KFM(KB_3) = f(WD(RB_1), SW)$$

Die gemeinsamen Soll-Wärmekarte kann dabei ein einziger Wert sein oder eine Wärmeverteilung. Existieren für die Korrekturbereiche $KB_2$ und $KB_3$ unterschiedliche Soll-Wärmekarten ($SW(KB_2)$ und $SW(KB_3)$), so würden sich unterschiedliche Korrekturfaktor-Module ($KFM(KB_2)$ und $KFM(KB_3)$) ergeben:

$$KFM(KB_2) = f(WD(RB_1), SW(KB_2)) \text{ und } KFM(KB_3) = f(WD(RB_1), SW(KB_3))$$

Es sei darauf hingewiesen, dass eine Ortsabhängigkeit von x, y (dem Baufeld) und auch von der Höhe z (also der Schicht) vorliegen kann. Es würde dann gelten:

$$f \to f(x, y, z), WD \to WD(x, y, z), SW \to SW(x, y, z) \text{ und } KBM \to KBM (x, y, z)$$

Es ist bevorzugt, dass bei einer Ausführungsform des Verfahrens Formbereiche einer Gruppe von Formbereichen in unterschiedlichen Schichten liegen, wobei insbesondere Referenzbereiche dieser Formbereiche in unterschiedlichen Schichten liegen, und eine Anzahl von Korrekturfaktor-Modulen für Korrekturbereiche einer aktuellen Schicht basierend auf Wärmedaten eines Referenzbereichs derselben Gruppe von Formbereichen einer darunterliegenden Schicht generiert werden. Dies eröffnet z.B. die Möglichkeit, Objekte in unterschiedlichen Höhen zu positionieren, die tiefstgelegenen Objekte als Testobjekte anzusehen und Daten über einige Objektschichten deren Fertigung zu sammeln, bevor die übrigen Objekte gefertigt werden. Wenn beispielsweise drei Objekte existieren die jeweils eine Objektschicht zueinander verschoben sind, dann kann eine Objektschicht des niedrigsten Objekts als Referenzschicht gefertigt werden und die entsprechende Objektschicht des zweitniedrigsten Objekts wird mit korrigierten Bestrahlungswerten verfestigt (Korrekturbereich und gleichzeitig Referenzbereich). Nun können weitere Objektschichten der beiden Objekte verfestigt werden und insbesondere überprüft werden, welche Auswirkungen die Korrektur auf eine nachfolgende Objektschicht hat, bevor die erste Objektschicht des dritten Objekts korrigiert wird.

Bevorzugt ist eine Anzahl von Objekten in unterschiedlichen Höhen angeordnet. Des Weiteren ist bevorzugt, dass ein Korrekturfaktor-Modul für einen Korrekturbereich in Abhängigkeit von der Höhe eines Referenzbereichs und/oder des Korrekturbereichs generiert wird. Beispielsweise ist der Wärmehaushalt einer Schicht, die direkt auf der Bauplatte liegt, anders als bei einer Schicht, die auf Stützstrukturen oder einer Pulverschicht ruht. Dies kann mit Einbeziehung der Höhe berücksichtigt werden.

Bevorzugt wird ein Korrekturfaktor-Modul für einen Korrekturbereich in Abhängigkeit von der Reihenfolge der Verfestigung der Korrekturbereiche generiert. Alternativ oder zusätzlich wird ein Korrekturfaktor-Modul für einen Korrekturbereich in Abhängigkeit von der Position (z.B. in der Baukammer (x, y, z) und/oder relativ zur Richtung des Gasstroms) des Korrekturbereichs generiert. Alternativ oder zusätzlich wird ein Korrekturfaktor-Modul für einen Korrekturbereich in Abhängigkeit von Stützstrukturen des Korrekturbereichs (z.B. vorhanden oder nicht vorhanden, wie groß/lang im Verhältnis zum Objekt) generiert. Alternativ oder zusätzlich wird ein Korrekturfaktor-Modul für einen Korrekturbereich in Abhängigkeit von einem Zeitintervall zwischen zwei sukzessiven Belichtungen eines betreffenden Objekts generiert.

Gemäß einer bevorzugten Ausführungsform des Verfahrens wird ein Korrekturfaktor-Modul aus Wärmedaten aus mehreren Referenzbereiche oder aus anderen Korrekturfaktor-Modulen ermittelt, bevorzugt durch Mittelwertbildung, die vorzugsweise gewichtet ist.

Seien beispielsweise Formbereiche von Objekt 1 und 2 in einer Schicht Referenzbereiche $RB_1$ und $RB_2$ und ein entsprechender Formbereich von Objekt 3 ein Korrekturbereich, $KB_3$, so werden bevorzugt bei der Generierung des Korrekturfaktor-Moduls (KFM) für den Korrekturbereich $KB_3$ die Wärmedaten $WD(RB_1)$ und $WD(RB_2)$ aus den beiden Referenzbereichen $RB_1$ und $RB_2$ unterschiedlich gewichtet. Das Korrekturfaktor-Modul ist also eine Korrekturfunktion von den Wärmedaten $WD(RB_1)$ und $WD(RB_2)$ sowie von den entsprechenden Gewichtungsfaktoren $k_1$ und $k_2$:

$$KFM(KB_3) = f(k_1, k_2, WD(RB_1), WD(RB_2), SW)$$

Insbesondere kann das Korrekturfaktor-Modul eine Korrekturfunktion des gewichteten Mittelwertes aus den Wärmedaten sein:

$$KFM(KB_3) = f((k_1 \cdot WD(RB_1) + k_2 \cdot WD(RB_2)) / (k_1 - k_2), SW)$$

In einem Beispiel kann $k_2$ größer als $k_1$ sein, weil bei der Verfestigung des Korrekturbereichs $KB_3$ die Umgebungsbedingungen, z.B. Temperaturbedingungen, ähnlich wie die Umgebungsbedingungen bei der Verfestigung des Referenzbereichs $RB_2$ sind. Es ist auch möglich, dass die Wärmedaten aus dem Referenzbereich $RB_1$ für die Generierung eines Korrekturfaktor-Moduls für den Bereich von Objekt 2 in der Schicht verwendet werden und dass gleichzeitig Wärmedaten aus demselben Bereich von Objekt 2 bei seiner Verfestigung aufgenommen werden. Dieser Bereich von Objekt 2 wäre also gleichzeitig ein Korrekturbereich und ein Referenzbereich. In diesem Fall sind die Wärmedaten aus dem Korrektur-/Referenzbereich von Objekt 2 weniger aussagekräftig als die Wärmedaten aus dem Referenzbereich $RB_1$ von Objekt 1, weil bei der Verfestigung vom Formbereich von Objekt 2 schon korrigierte Prozesswerte verwendet wurden und man würde aus diesem Grund den Wärmedaten aus dem Referenzbereich $RB_1$ ein größeres Gewicht geben (spricht, $k_1$ ist größer als $k_2$).

Es ist auch möglich, zuerst Korrekturfaktor-Module für einen Korrekturbereich aus den Wärmedaten der Referenzbereiche separat zu ermitteln und dieses dann zu mitteln. Für das vorangehende Beispiel sähe dies z.B. so aus:

$$KFM1(KB_3) = f(WD(RB_1), SW) \text{ und } KFM2(KB_3) = f(WD(RB_2), SW)$$

$$KFM1(KB_3) = (k_1 \cdot KFM1(KB_3) + k_2 \cdot KFM1(KB_3)) / (k_1 + k_2)$$

Noch weiter ist es möglich, die Änderungen der Reihenfolge in den verschiedenen Schichten bei der Generierung des Korrekturfaktor-Moduls zu berücksichtigen. Wie schon gesagt ist es möglich, die Reihenfolge der Belichtung in den verschiedenen Schichten zu variieren und dabei in jeder Schicht ein Bereich eines jeweils unterschiedlichen Objekts als Referenzbereich auszuwählen.

Die Änderung der Reihenfolge zu berücksichtigen kann auch bedeuten, dass die Korrekturfaktoren der Korrekturfaktor-Module (bzw. die korrigierte Bestrahlungswerte) vom Zeitintervall zwischen zwei sukzessiven Belichtungen des gleichen Objekts (insbesondere von zwei sukzessiven Objektschichten desselben Objekts) abhängen.

Es werden beispielsweise zwei Schichten A und B von drei Objekten betrachtet, in denen jeweils eine Formbereich-Gruppe festgelegt worden ist, wobei die Formbereiche der beiden Gruppen übereinanderliegende Objektschichten sind. $RB_{1A}$ ist der Referenzbereich für die Korrekturbereiche $KB_{2A}$ und $KB_{3A}$ in der unteren Schicht A. In der nächsten Schicht B wurde der Formbereich von Objekt 2, der über $KB_{2A}$ liegt, als Referenzbereich $RB_{2B}$ für die Korrekturbereiche $KB_{1B}$ und $KB_{3B}$ der anderen beiden Objekte ausgewählt, welche auch über den vorgenannten Bereichen liegen. Es sei die Verfestigungsreihenfolge: $RB_{1A}$, $KB_{2A}$, $KB_{3A}$, Auftragen neuer Schicht von Aufbaumaterial, $RB_{2B}$, $KB_{3B}$ und $KB_{1B}$.

Zwischen der Belichtung von $KB_{3A}$ und $KB_{3B}$ vergeht also ein Belichtungsintervall (die Belichtungszeit von $RB_{2B}$) plus das Beschichtungsintervall und zwischen der Belichtung von $RB_{1A}$ und $KB_{1B}$ vergehen vier Belichtungsintervalle (die Belichtungszeiten für $KB_{2A}$, $KB_{3A}$, $RB_{2B}$ und $KB_{3B}$) plus das Beschichtungsintervall. Zum Zeitpunkt der jeweiligen Verfestigung ist $KB_{3B}$ heißer als $KB_{1B}$, weil $KB_{1B}$ nach einem ca. viermal längeren Zeitintervall als $KB_{3B}$ belichtet wird. Dadurch konnte $RB_{1A}$, der unten $KB_{1B}$ liegt, mehr Wärme abgeben als $KB_{3A}$, der unter $KB_{3B}$ liegt.

Daher wird in einem solchen Fall die Korrekturfaktor-Module bevorzugt so generiert, dass für einen Korrekturbereich zusätzlich die vergangene Zeit der Verfestigung der betreffenden unteren Objektschicht berücksichtigt wird. Dies kann sich auf eine Bestrahlungsintensität und/oder eine Scangeschwindigkeit auswirken. In dem vorangehenden Beispiel wird daher das Korrekturfaktor-Modul so generiert, dass die daraus resultierenden korrigierten Bestrahlungswerte für $KB_{3B}$ eine kleinere Bestrahlungsintensität und/oder eine größere Scangeschwindigkeit aufweisen als korrigierte Bestrahlungswerte eines Korrekturfaktor-Moduls, das die Bestrahlungsreihenfolge nicht berücksichtigt. Die korrigierten Bestrahlungswerte für $KB_{1B}$ weisen hingegen eine größere Bestrahlungsintensität und/oder eine kleinere Scangeschwindigkeit auf als die des Korrekturfaktor-Moduls für $KB_{3B}$. Auf diese Weise ist es möglich, thermische Effekte, die durch die Bestrahlungsreihenfolge auftreten, zu kompensieren.

In einem Beispiel für eine weitere bevorzugte Ausführungsform wird die Höhe einer Objektschicht bzw. ihre Umgebung berücksichtigt. Vergleicht man z.B. drei Referenzbereiche, von denen der eine direkt auf einer Bauplattform liegt und der andere auf Stützstrukturen oder einer unverfestigten Pulverschicht und der dritte auf einer verfestigten Schicht, so könnte für ein Korrekturfaktor-Modul für einen Korrekturbereich die Daten desjenigen Referenzbereichs ausgewählt werden oder durch Wichtungsfaktoren berücksichtigt werden, dessen Umgebung der des Korrekturbereichs am ähnlichsten ist. Liegt der Korrekturbereich z.B. auf Stützstrukturen, könnte der zweite Referenzbereich bevorzugt werden.

In einem Beispiel für eine weitere bevorzugte Ausführungsform wird die Position in der Baukammer besonders berücksichtigt. Einige Eigenschaften der Objekte (z.B. ihre Porosität) können von ihrer Position in der Baukammer bzw. von ihrer Position im Vergleich zur Richtung des Gasstroms abhängen. Es werden hier bevorzugt zwei oder mehr Referenzbereiche an unterschiedlichen Positionen ausgewählt, wobei sich diese Positionen systematisch im Hinblick auf die zu erwartenden Wärmedaten unterscheiden, insbesondere an Positionen, an denen die größten Unterschiede bei den Wärmedaten zu erwarten sind. Dies sind z.B. die erste und letzte Baureihe oder das nächste Objekt am Gaseinlass und das Objekt, welches am weitesten vom Gaseinlass entfernt ist. Ein Korrekturfaktor-Modul wird dann bevorzugt aus einer Wichtung der Wärmedaten der Referenzbereiche ermittelt, wobei die Wichtung von der Position des betreffenden Korrekturbereichs relativ zu den Referenzbereichen abhängt. Der jeweils nächste Referenzbereich erhält dabei insbesondere die höchste Wichtung.

Bevorzugt werden ein Korrekturbereich bei (d.h. direkt nach oder während) seiner Verfestigung zur Generierung eines Korrekturfaktor-Moduls als Referenzbereich ausgewählt, Wärmedaten dieses Referenzbereichs aufgenommen und diese Wärmedaten in eine Generierung einer Anzahl von Korrekturfaktor-Modulen zur Verfestigung anderer Korrekturbereiche verwendet. Damit kann eine iterative Korrektur realisiert werden. Da zur Verfestigung eines Korrekturbereichs korrigierte Bestrahlungsparameter verwendet werden, können Wärmedaten dieses Korrekturbereichs als Maß für die Qualität der Korrektur dienen und mit diesen ein verbessertes Korrekturfaktor-Modul erstellt werden. Der betreffende Korrekturbereich dient also gleichzeitig als Referenzbereich.

Es kann sein, dass es in einem Formbereich einen Sonderbereich gibt, der systematisch anders korrigiert werden muss als ein anderer Bereich ("Normalbereich") des Formbereichs. Dies kann z.B. der Rand sein, bei dem die Wärmedaten dadurch verfälscht werden, dass der Rand bei einem Graustufenbild genau durch Pixel hindurch laufen kann, deren Grauwerte dann durch kälteres, umgebendes Material systematisch verfälscht werden.

Dazu ist es bevorzugt, dass ein Korrekturfaktor-Modul basierend auf unterschiedlichen Korrekturfunktionen generiert wird. Beispielsweise kann eine Korrekturfunktion f im Hinblick auf den Innenbereich eines Objekts angewendet werden und eine andere Korrekturfunktion g im Hinblick auf dessen Rand. Bevorzugt wird ein Korrekturfaktor-Modul mit den folgenden Schritten generiert:

- Unterteilen einer Anzahl von Korrekturbereichen in eine Anzahl von Normalbereiche, in denen die Wärmedaten in einem vorgegebenen Wertebereich um einen dort entsprechenden Wert der Soll-Temperaturkarte liegen und in eine Anzahl von Sonderbereiche, in denen die Wärmedaten außerhalb des Wertebereichs liegen,

- Generieren des Korrekturfaktor-Moduls dermaßen, dass eine erste Korrekturfunktion für die Anzahl von Normalbereichen verwendet wird und eine zweite Korrekturfunktion für die Anzahl von Sonderbereichen, wobei sich die erste Korrekturfunktion und die zweite Korrekturfunktion voneinander unterscheiden.

Die "Anzahl von Korrekturbereichen" sollte die Korrekturbereiche umfassen, auf die das Korrekturfaktor-Modul angewendet werden soll. Da die Korrekturbereiche jedoch Formbereiche sind (also alle identisch oder zumindest ähnlich), könnte im Grunde auch ein beliebiger Formbereich dazu verwendet werden.

Das Unterteilen von Korrekturbereichen geschieht so, dass im Grunde ermittelt wird, wo die Korrektur in Ordnung war (Normalbereiche) und wo nicht. Ein Sonderbereich kann nun strikt jeder Bereich sein, in dem die Wärmedaten außerhalb des Wertebereichs liegen. Um jedoch Ausreißer in den Daten zu kompensieren, könnten auch vorher "potentielle Sonderbereiche" festgelegt werden, die komplett zu Sonderbereichen werden, wenn dort die überwiegende Fläche außerhalb des Wertebereichs liegen würde. Ein potentieller Sonderbereich könnte ein Randbereich sein, ein abgeschlossener Bereich unter einem vorgegebenen Flächeninhalt, oder Strukturen mit einem spitzen Winkel unterhalb einer vorgegebenen Gradzahl.

Das Korrekturfaktor-Modul kann dann z.B. so generiert werden, dass für einen Normalbereich die Korrekturfunktion f von dem Korrekturfaktor-Modul desjenigen Referenzbereichs verwendet wird, von dem die Wärmedaten stammen (er war ja vor seiner Verfestigung ein Korrekturbereich). Die Korrekturfunktion g für einen Sonderbereich könnte dann individuell ermittelt werden, insbesondere durch Abwandlung der anderen Korrekturfunktion f.

Bei einem Korrekturbereich, der mit diesem Korrekturfaktor-Modul korrigiert wird, wird dann ein Normalbereich basierend auf der entsprechenden Korrekturfunktion f korrigiert und ein Sonderbereich basierend auf der entsprechenden Korrekturfunktion g.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:

Figur 1 eine schematische, teilweise im Schnitt dargestellte Ansicht eines Ausführungsbeispiels einer Vorrichtung zur additiven Fertigung,

Figur 2 eine Anordnung von Objekten in Schichten in Aufsicht,

Figur 3 drei Schichten mit Objektschichten, Referenzbereichen und Korrekturbereichen,

Figur 4 Formbereiche innerhalb eines Objekts mit einem Wechsel des Referenzbereichs,

Figur 5 eine Anordnung von Objekten und Wechsel der Referenzbereiche innerhalb eines Objekts und ggf. auch zwischen Objekten in Aufsicht,

Figur 6 ein Blockschaltbild des Verfahrens als Regelverfahren und alternativ als Trainingsverfahren,

Figur 7 Referenzbereiche und Korrekturbereiche in unterschiedlich gelagerten Objekten.

Die nachfolgenden Ausführungsbeispiele werden mit Bezug auf eine Vorrichtung 1 zur additiven Fertigung von Bauteilen in Form einer selektiven Lasersinter- oder Laserschmelzvorrichtung beschrieben, wobei explizit noch einmal darauf hingewiesen ist, dass die Erfindung nicht auf selektive Lasersinter- oder Laserschmelzvorrichtungen beschränkt ist. Die Vorrichtung wird im Folgenden - ohne eine Beschränkung der Allgemeinheit - daher kurz als "Fertigungsvorrichtung" 1 bezeichnet.

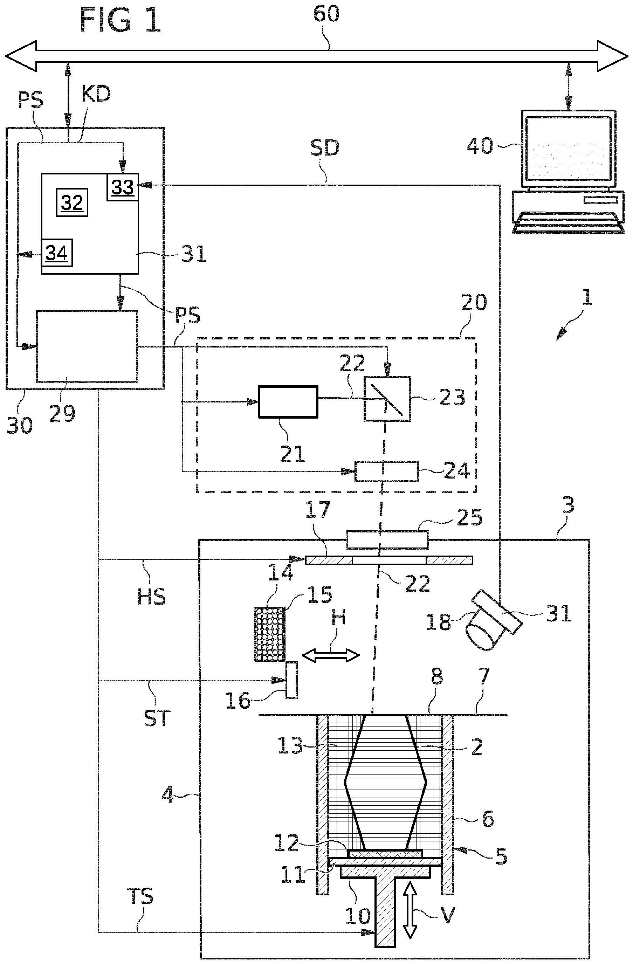

Eine solche Fertigungsvorrichtung 1 ist schematisch in Figur 1 gezeigt. Die Vorrichtung weist eine Prozesskammer 3 bzw. einen Prozessraum 3 mit einer Kammerwandung 4 auf, in der im Wesentlichen der Fertigungsprozess abläuft. In der Prozesskammer 3 befindet sich ein nach oben offener Behälter 5 mit einer Behälterwandung 6. Die obere Öffnung des Behälters 5 bildet die jeweils aktuelle Arbeitsebene 7. Der innerhalb der Öffnung des Behälters 5 liegende Bereich dieser Arbeitsebene 7 kann zum Aufbau des Objekts 2 verwendet werden und wird daher als Baufeld 8 bezeichnet.

Der Behälter 5 weist eine in einer vertikalen Richtung V bewegliche Grundplatte 11 auf, die auf einem Träger 10 angeordnet ist. Diese Grundplatte 11 schließt den Behälter 5 nach unten ab und bildet damit dessen Boden. Die Grundplatte 11 kann integral mit dem Träger 10 gebildet sein, sie kann aber auch eine getrennt von dem Träger 10 gebildete Platte sein und an dem Träger 10 befestigt oder auf diesem einfach gelagert sein. Je nach Art des konkreten Aufbaumaterials, also beispielsweise des verwendeten Pulvers, und des Fertigungsprozesses kann auf der Grundplatte 11 eine Bauplattform 12 als Bauunterlage angebracht sein, auf der das Objekt 2 aufgebaut wird. Grundsätzlich kann das Objekt 2 aber auch auf der Grundplatte 11 selbst aufgebaut werden, die dann die Bauunterlage bildet.

Der grundsätzliche Aufbau des Objekts 2 erfolgt, indem eine Schicht Aufbaumaterial 13 zunächst auf die Bauplattform 12 aufgebracht wird, dann - wie später erläutert - mit einem Laserstrahl 22 als Energiestrahl an den Punkten, welche Teile des zu fertigenden Objekts 2 bilden sollen, das Aufbaumaterial 13 selektiv verfestigt wird, dann mit Hilfe des Trägers 10 die Grundplatte 11, somit die Bauplattform 12 abgesenkt wird und eine neue Schicht des Aufbaumaterials 13 aufgetragen und selektiv verfestigt wird usw. In Figur 1 ist das in dem Behälter auf der Bauplattform 12 aufgebaute Objekt 2 unterhalb der Arbeitsebene 7 in einem Zwischenzustand dargestellt. Es weist bereits mehrere verfestigte Schichten auf, umgeben von unverfestigt gebliebenem Aufbaumaterial 13. Als Aufbaumaterial 13 können verschiedene Materialien verwendet werden, vorzugsweise Pulver, insbesondere Metallpulver, Kunststoffpulver, Keramikpulver, Sand, gefüllte oder gemischte Pulver oder auch pastöse Materialien sowie optional eine Mischung mehrerer Materialien.

Frisches Aufbaumaterial 15 befindet sich in einem Vorratsbehälter 14 der Fertigungsvorrichtung 1. Mit Hilfe eines in einer horizontalen Richtung H bewegbaren Beschichters 16 kann das Aufbaumaterial in der Arbeitsebene 7 bzw. innerhalb des Baufelds 8 in Form einer dünnen Schicht aufgebracht werden.

Optional befindet sich in der Prozesskammer 3 eine zusätzliche Strahlungsheizung 17. Diese kann zum Beheizen des aufgebrachten Aufbaumaterials 13 dienen, so dass die für die selektive Verfestigung genutzte Bestrahlungseinrichtung nicht zu viel Energie einbringen muss. Das heißt, es kann beispielsweise mit Hilfe der Strahlungsheizung 17 schon eine Menge an Grundenergie in das Aufbaumaterial 13 eingebracht werden, welche natürlich noch unterhalb der notwendigen Energie ist, bei der das Aufbaumaterial 13 verschmilzt oder sintert. Als Strahlungsheizung 17 kann beispielsweise ein Infrarotstrahler oder VCSEL-Strahler genutzt werden.

Zum selektiven Verfestigen weist die Fertigungsvorrichtung 1 eine Bestrahlungsvorrichtung 20 bzw. konkret Belichtungsvorrichtung 20 mit einem Laser 21 auf. Dieser Laser 21 erzeugt einen Laserstrahl 22, der über eine Umlenkvorrichtung 23 umgelenkt wird, um so die gemäß der Belichtungsstrategie vorgesehenen Belichtungspfade oder Spuren in der jeweils selektiv zu verfestigenden Schicht abzufahren und selektiv die Energie einzubringen. Weiter wird dieser Laserstrahl 22 durch eine Fokussiereinrichtung 24 auf die Arbeitsebene 7 in geeigneter Weise fokussiert. Die Bestrahlungsvorrichtung 20 befindet sich hier vorzugsweise außerhalb der Prozesskammer 3 und der Laserstrahl 22 wird über ein an der Oberseite der Prozesskammer 3 in der Kammerwandung 4 angebrachtes Einkoppelfenster 25 in die Prozesskammer 3 geleitet.

Die Bestrahlungsvorrichtung 20 kann beispielsweise nicht nur einen, sondern mehrere Laser umfassen. Vorzugsweise kann es sich hierbei um Gas- oder Festkörperlaser oder jede andere Art von Laser wie z. B. Laserdioden handeln, insbesondere VCSEL (Vertical Cavity Surface Emitting Laser) oder VECSEL (Vertical External Cavity Surface Emitting Laser) oder eine Zeile dieser Laser. Ganz besonders bevorzugt können im Rahmen der Erfindung ein oder mehrere unpolarisierte Single-Mode-Laser, z. B. ein 3 kW-Faserlaser mit einer Wellenlänge von 1070 nm, eingesetzt werden.

Die Fertigung wird mit der Sensoranordnung 18 überwacht. Diese kann z.B. einen Strahlungssensor, z.B. eine Wärmebildkamera, umfassen und misst ortsaufgelöste Wärmedaten einer Anzahl von Bereichen (Referenzbereiche) einer Bauteilschicht B.

Zur Steuerung der Einheiten der Fertigungsvorrichtung 1 dient eine Steuereinrichtung 30 umfassend eine Steuereinheit 29, welche die Komponenten der Bestrahlungsvorrichtung 20, nämlich hier den Laser 21, die Umlenkvorrichtung 23 und die Fokussiervorrichtung 24, ansteuert und hierzu an diese entsprechend Steuerdaten PS übergibt.

Die Steuereinheit 29 steuert auch mittels geeigneter Heizungssteuerdaten HS die Strahlungsheizung 17 an, mittels Beschichtungssteuerdaten ST den Beschichter 16 und mittels Trägersteuerdaten TS die Bewegung des Trägers 10 und steuert somit die Schichtdicke.

Die Steuereinrichtung 30 ist, hier z. B. über einen Bus 60 oder eine andere Datenverbindung, mit einem Terminal 40 mit einem Display oder dergleichen gekoppelt. Über dieses Terminal 40 kann ein Bediener die Steuereinrichtung 30 und somit die gesamte Lasersintervorrichtung 1 steuern, z. B. durch Übermittlung von Prozesssteuerdaten PS.

Die Steuereinrichtung 30 umfasst eine erfindungsgemäße Regelvorrichtung 31 zur Regelung der Bestrahlung. Sie Regelvorrichtung 31 umfasst eine Vorgabe-Einheit 32, die Sensoreinheit 18, eine Korrekturmodul-Einheit 33 und eine Steuerdateneinheit 34.

Die Vorgabe-Einheit 32 ist zum Vorgeben von einigen Bereichen bzw. Zielwerten ausgelegt, die für die Korrektur benötigt werden. Alles kann zu Beginn des Verfahrens bereits fest vorgegeben sein aber auch während des Verfahrens zusätzlich vorgegeben werden. Die Vorgabe Einheit hat die folgenden Aufgaben:

- Festlegen einer Mehrzahl von einander in Form und/oder Größe entsprechenden Formbereichen in den zu verfestigenden Objektschichten O,
- Auswahl einer Anzahl von Referenzbereichen R aus der Mehrzahl der Formbereiche, wobei die übrigen Formbereiche als Korrekturbereiche K definiert werden, und

- Festlegen einer Anzahl von Soll-Wärmekarten S welche eine gewünschte Wärmeverteilung von Korrekturbereichen K oder einer Anzahl von Gruppen von Korrekturbereichen K vorgeben.

Die Sensoreinheit 18 ist zum Aufnehmen von ortsaufgelösten Wärmedaten W der Anzahl von Referenzbereichen R bei ihrer Verfestigung ausgelegt. Sie kann z.B. während der Verfestigung einer Bauteilschicht diese in Form eines Filmes oder von vielen Bildern aufnehmen. Aus den einzelnen Bildern können dann die Wärmedaten aus dem jeweils gerade verfestigten Teilbereich zusammengestellt werden.

Die Korrekturmodul-Einheit 33 dient zum Generieren einer Anzahl von Korrekturfaktor-Modulen F für die Korrekturbereiche K aus den Wärmedaten W und den Soll-Wärmekarten S, wobei jedes Korrekturfaktor-Modul F ortsaufgelöste Korrekturfaktoren für Bestrahlungswerte oder ortsaufgelöste korrigierte Bestrahlungswerte angibt und jedem Korrekturbereich K ein Korrekturfaktor-Modul F zugeordnet ist.

Die Steuerdateneinheit 34 dient zum Erzeugen und Ausgeben von Steuerdaten zum Verfestigen zumindest der Korrekturbereiche K basierend auf dem ihnen jeweils zugeordneten Korrekturfaktor-Modul F.

Es wird an dieser Stelle auch noch einmal darauf hingewiesen, dass die vorliegende Erfindung nicht auf eine solche Fertigungsvorrichtung 1 beschränkt ist. Sie kann auf andere Verfahren zum generativen bzw. additiven Herstellen eines dreidimensionalen Objekts durch schichtweises Aufbringen und selektives Verfestigen eines Aufbaumaterials angewendet werden, wobei ein Energiestrahl zum Verfestigen auf das zu verfestigende Aufbaumaterial abgegeben wird. Dementsprechend kann auch die Bestrahlungsvorrichtung nicht nur, wie hier beschrieben, ein Laser sein, sondern es könnte jede Einrichtung verwendet werden, mit der Energie als Wellen- oder Teilchenstrahlung selektiv auf bzw. in das Aufbaumaterial gebracht werden kann. Beispielsweise könnte anstelle eines Lasers eine andere Lichtquelle, ein Elektronenstrahl etc. verwendet werden.

Auch wenn in Figur 1 nur ein einzelnes Objekt 2 dargestellt wird, ist es bevorzugt, mehrere Objekte in der Prozesskammer 3 bzw. im Behälter 5 zeitlich parallel herzustellen. Dazu wird das Aufbaumaterial schichtweise an Stellen, die den Querschnitten der Objekte in der jeweiligen Schicht entsprechen, durch den Energiestrahl 22 abgetastet.

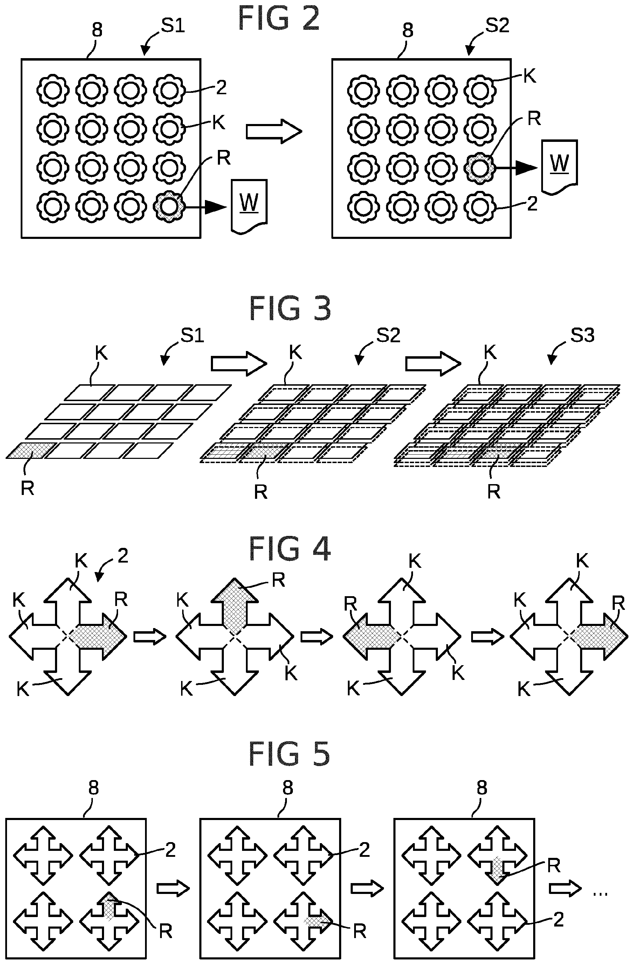

Figur 2 zeigt eine Anordnung von Objekten 2 in Schichten auf einem Baufeld 8 in Aufsicht. Es werden insgesamt 16 identische Objekte 2 gefertigt. In der links dargestellten Schicht S1 sind 16 identische Formbereiche zu sehen. Der Formbereich des Objekts 2 in der rechten unteren Ecke ist hier als Referenzbereich R ausgewählt und bereits verfestigt. Die Schraffur soll die Wärmeverteilung darstellen, die in Form von Wärmedaten W aufgenommen wird. Die übrigen Formbereiche sind Korrekturbereiche, deren Bestrahlung mit diesen Wärmedaten korrigiert wird.

In der rechts dargestellten Schicht S2 ist der Referenzbereich R in dem Objekt 2 über dem Objekt 2 der linken Schicht S1. Damit wird diese Schicht auf einer bereits korrigierten und damit thermisch angepassten Schicht verfestigt, so dass eine thermische Verfälschung geringer ist, als wenn ausschließlich das Objekt 2 in der rechten unteren Ecke als Referenz verwendet wird.

Figur 3 zeigt drei Schichten mit Objektschichten O, Referenzbereichen R und Korrekturbereichen K. Hier liegt der Referenzbereich in der untersten Zeile und rückt mit jeder Schicht S1, S2, S3 von der liken unteren Ecke um einen Platz weiter nach rechts. Es soll hier die Verfälschung der Wärme einer Objektschicht O aufgrund eines falschen Wärmeeintrags gezeigt werden.

In der linken Schicht wurde der Referenzbereich R fasch bestrahlt, z.B. zu warm, was in den Korrekturbereichen K korrigiert werden konnte. In der nächsten Schicht S2 (Mitte) dringt in der linken unteren Ecke noch etwas von der überschüssigen Wärme der unteren Schicht S1 in die nun verfestigte Objektschicht O ein (dünne Schraffur). Es biete sich also an, einen anderen Referenzbereich R auszuwählen, nämlich z.B. den rechts daneben.

Im Rechten Bild besteht noch eine kleine thermische Irritation in der linken unteren Ecke. Daher wird ein Referenzbereich R in einem weiteren Objekt (rechts nebenan) gewählt. Theoretisch könnte in der nächsten Schicht der Referenzbereich wieder vom Objekt 2 links unten gewählt werden, so dass man am Ende drei "Opferobjekte" hat und die übrigen Objekte optimal gefertigt worden sind.

Figur 4 zeigt Formbereiche innerhalb eines Objekts 2 mit einem Wechsel des Referenzbereichs R. Hier ist ein symmetrisches Objekt 2 mit vier gleichen Formbereichen gezeigt. Das gestrichelte Kreuz in der Mitte soll lediglich eine optische Trennung der Formbereiche darstellen. Es ist nun im Unterschied zur Figur 3 möglich, in jeder Schicht einen anderen Formbereich desselben Objekts 2 als Referenzbereich R zu wählen. Wie zu Figur 3 vorgeschlagen, wird nach drei Schichten wieder von vorne begonnen, so dass die nach unten weisende Pfeilform niemals ein Referenzbereich ist. In der Praxis bietet es sich jedoch an, einen Referenzbereich R reihum zu wählen.

Figur 5 zeigt eine Anordnung von Objekten und Wechsel der Referenzbereiche innerhalb eines Objekts 2 und ggf. auch zwischen Objekten 2 in Aufsicht. Die Form der Figur 4 wird hier vierfach hergestellt, wobei der Referenzbereich R stets wechselt. In der rechten Darstellung ist angedeutet, dass der Referenzbereich R nicht nur in demselben Objekt O ausgewählt sein muss.

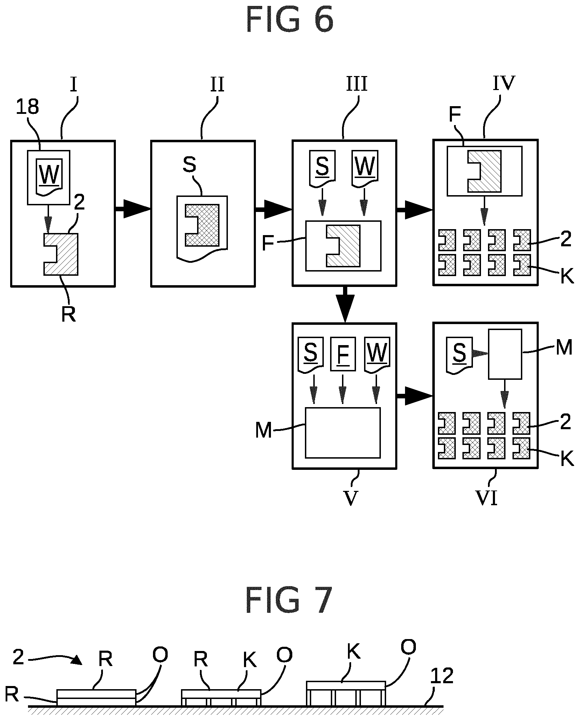

Figur 6 zeigt ein Blockschaltbild des Verfahrens als Regelverfahren und alternativ als Trainingsverfahren.

In Schritt I erfolgt ein Verfestigen eines Referenzbereichs R und Aufnehmen von ortsaufgelösten Wärmedaten W

der Anzahl von Referenzbereichen bei (also nach oder während) ihrer Verfestigung. Die Wärmedaten W können hier z.B. ein Graustufenbild darstellen.

In Schritt II wird eine Soll-Wärmekarte S festgelegt, welche hier für alle Formbereiche der gefertigten Objekte O gelten soll. Diese Soll-Wärmekarte gibt eine gewünschte Wärmeverteilung von Korrekturbereichen K vor.

In Schritt III wird ein Korrekturfaktor-Modul F für die Korrekturbereiche K aus den Wärmedaten W und den Soll-Wärmekarten S generiert. Das Korrekturfaktor-Modul F gibt dabei ortsaufgelöste Korrekturfaktoren für Bestrahlungswerte an und ist jedem Korrekturbereich K zugeordnet.

Nun trennt sich das Verfahren in zwei mögliche Stränge auf.

In Schritt IV werden Korrekturbereiche K von anderen Objekten 2 basierend auf dem Korrekturfaktor-Modul F korrigiert und damit ihre Qualität optimiert.

Im alternativen Strang wird in Schritt V ein maschinenlernfähiges Modell M mit den Wärmedaten, der Soll-Wärmekarte und dem Korrekturfaktor-Modul F trainiert. Es können dabei noch die Wärmedaten W der in Schritt IV gefertigten Korrekturbereiche hinzugenommen werden (dann wären diese Korrekturbereiche zusätzlich Referenzbereiche R).

In Schritt IV werden Korrekturbereiche K von anderen Objekten 2 basierend auf Wärmedaten und dem trainierten Modell M korrigiert und damit ihre Qualität optimiert.

Figur 7 zeigt Referenzbereiche R und Korrekturbereiche K in unterschiedlich gelagerten Objekten 2. Links ist ein Objekt 2 dargestellt, bei dem ein Referenzbereich R (unten) auf einer Bauplattform 12 liegt. Dort ist die Wärmeabfuhr nach unten sehr gut und die Wärmedaten dieses Referenzbereichs R könnten nicht repräsentativ für andere Bereiche sein. In diesem Objekt 2 ist auch ein Referenzbereich R (oben) gezeigt, der auf einem verfestigten Bereich liegt. Das Bauteil 2 in der Mitte weist einen Formbereich auf, der gleichzeitig Referenzbereich R als auch Korrekturbereich K ist. Die betreffende Objektschicht O ruht auf Abstandshaltern. Vergleicht man diesen Aufbau mit dem Objekt links daneben, dann könnte der dortige obere Referenzbereich R vielleicht zur Korrektur herangezogen werden. Am besten wäre es, den Referenzbereich R des mittleren Objekts O zur Korrektur des Korrekturbereichs K des rechten Objekts 2 heranzuziehen, da der Aufbau mit den Abstandshaltern entsprechend ist.

Es wäre auch möglich, alle Referenzbereiche R für die Korrektur des Korrekturbereichs K zu berücksichtigen, wobei die Wärmedaten aus den Referenzbereichen oder die darauf basierenden Korrekturfaktor-Module jeweils anders gewichtet werden und wobei bevorzugt den Wärmedaten oder dem Korrekturfaktor-Modul des Referenzbereichs R des mittleren Objekts O ein größeres Gewichtig als den Wärmedaten oder den Korrekturfaktor-Modulen der anderen Referenzbereiche zugeordnet wird.

Es wird abschließend noch einmal darauf hingewiesen, dass es sich bei der vorhergehend detailliert beschriebenen Erfindung lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen Begriffe wie "Einheit" nicht aus, dass die betreffenden Komponenten aus mehreren zusammenwirkenden Teil-Komponenten bestehen, die ggf. auch räumlich verteilt sein können. Der Begriff "eine Anzahl" ist als "mindestens ein(e)" zu lesen. Unabhängig vom grammatikalischen Geschlecht eines bestimmten Begriffes sind Personen mit männlicher, weiblicher oder anderer Geschlechteridentität mit umfasst.

Bezugszeichenliste

| 1 | Fertigungsvorrichtung / Lasersintervorrichtung |
| 2 | Objekt |
| 3 | Prozessraum / Prozesskammer |
| 4 | Kammerwandung |
| 5 | Behälter |
| 6 | Behälterwandung |
| 7 | Arbeitsebene |
| 8 | Baufeld |
| 10 | Träger |
| 11 | Grundplatte |
| 12 | Bauplattform |
| 13 | Aufbaumaterial (im Behälter 5) |
| 14 | Vorratsbehälter |
| 15 | Aufbaumaterial (im Vorratsbehälter 14) |
| 16 | Beschichter |

| 17 | Strahlungsheizung |
|----|----|
| 18 | Sensoreinheit |
| 20 | Bestrahlungsvorrichtung |
| 21 | Laser |
| 22 | Strahl |
| 23 | Umlenkvorrichtung / Scanner |
| 24 | Fokussiereinrichtung |
| 25 | Einkoppelfenster |
| 29 | Steuereinheit |
| 30 | Steuereinrichtung |
| 31 | Regelvorrichtung |
| 32 | Vorgabe-Einheit |
| 33 | Korrekturmodul-Einheit |
| 34 | Steuerdateneinheit |
| 40 | Terminal |
| 60 | Bus |
| F | Korrekturfaktor-Modul |
| H | horizontale Richtung |
| HS | Heizungssteuerdaten |
| K | Korrekturbereich |
| KD | Prozessraum-Kontrolldatensatz |
| M | maschinenlernfähiges Modell |
| O | Objektschicht |
| PS | Prozesssteuerdaten |
| R | Referenzbereich |
| S | Soll-Wärmekarte |
| S1, S2, S3 | Schicht |
| SD | Prozessraum-Sensordatensatz |
| ST | Beschichtungssteuerdaten |
| TS | Trägersteuerdaten |
| V | vertikale Richtung |
| W | Wärmedaten |

**Patentansprüche**

1. Verfahren zur Regelung einer Bestrahlung in einem Fertigungsverfahren zur additiven Fertigung von Objekten (2), wobei in einem Baufeld (8) Aufbaumaterial schichtweise in Form von Objektschichten (O), entsprechend Querschnitten der zu fertigenden Objekte (2), mittels Bestrahlung des Aufbaumaterials verfestigt wird, das Verfahren umfassend die Schritte:

   - Festlegen einer Mehrzahl von einander in Form und/oder Größe entsprechenden Formbereichen in den zu verfestigenden Objektschichten (O),
   - Auswahl einer Anzahl von Referenzbereichen (R) aus der Mehrzahl der Formbereiche, wobei zumindest die übrigen Formbereiche als Korrekturbereiche (K) definiert werden,
   - Festlegen einer Anzahl von Soll-Wärmekarten (S) welche eine gewünschte Wärmeverteilung von Korrekturbereichen (K) oder einer Anzahl von Gruppen von Korrekturbereichen (K) vorgeben,
   - Verfestigen einer Anzahl ausgewählter Referenzbereiche (R) und Aufnehmen von ortsaufgelösten Wärmedaten (W) der Anzahl von Referenzbereichen (R) bei ihrer Verfestigung,
   - Generieren einer Anzahl von Korrekturfaktor-Modulen (F) für die Korrekturbereiche (K) aus den Wärmedaten (W) und den Soll-Wärmekarten (S), wobei jedes Korrekturfaktor-Modul (F) ortsaufgelöste Korrekturfaktoren für Bestrahlungswerte oder ortsaufgelöste korrigierte Bestrahlungswerte angibt und jedem Korrekturbereich (K) ein Korrekturfaktor-Modul (F) zugeordnet ist,
   - Verfestigen zumindest der Korrekturbereiche (K) basierend auf dem ihnen jeweils zugeordneten Korrekturfaktor-Modul (F).

2. Verfahren gemäß einem der vorstehenden Ansprüche, wobei eine Mehrzahl von Gruppen von Formbereichen in unterschiedlichen Schichten (S1, S2, S3) festgelegt werden und für jede Gruppe von Formbereichen die Verfahrensschritte durchgeführt werden, bevorzugt wobei in S übereinanderliegenden Schichten (S1, S2, S3) jeweils Gruppen von Formbereichen festgelegt werden, so dass eine Mehrzahl von Formbereichs-Stapeln vorliegt, welche aus übereinanderliegenden Formbereichen unterschiedlicher Gruppen von Formbereichen gebildet werden,

bevorzugt wobei aus jeder Gruppe von Formbereichen mehrere Formbereiche in N Objekten (2), insbesondere N Formbereichs-Stapel, ausgewählt werden und aus den ausgewählten Formbereichen in jeder Schicht (S1, S2, S3) M Referenzbereiche (R) ausgewählt werden mit M < N,
bevorzugt wobei die ausgewählten Formbereiche, insbesondere die Formbereichs-Stapel, den Objektschichten (O) eines Objekts (2) entsprechen und/oder ein Objekt (2) in mehrere Formbereichs-Stapel unterteilt wird.

3. Verfahren gemäß einem der vorstehenden Ansprüche, wobei für eine aktuelle Schicht (S1, S2, S3) eine Mehrzahl von Referenzbereichen (R) aus den Formbereichen der Schicht (S1, S2, S3) ausgewählt wird und Wärmedaten (W) dieser Referenzbereiche (R) aufgenommen werden und/oder Wärmedaten (W) von Referenzbereichen (R) von einer Anzahl von Schichten (S1, S2, S3) unter der aktuellen Schicht (S1, S2, S3) bereitgestellt werden, und Korrekturfaktor-Module (F) für die Korrekturbereiche (K) der aktuellen Schicht (S1, S2, S3) aus diesen Wärmedaten (W) und den betreffenden Soll-Wärmekarten (S) generiert werden,
bevorzugt wobei dazu ein, vorzugsweise gewichteter, Mittelwert aus den Wärmedaten (W) berechnet wird oder zunächst mehrere Korrekturfaktor-Module (F) für unterschiedliche Wärmedaten (W) berechnet werden und aus diesen Korrekturfaktor-Modulen (F) ein, vorzugsweise gewichteter, Mittelwert berechnet wird.

4. Verfahren gemäß einem der vorstehenden Ansprüche, wobei ein Korrekturfaktor-Modul (F) KFM für einen Korrekturbereich (K) KB mittels einer Korrekturfunktion f aus den Wärmedaten (W) $WD(RB_i)$ einer Anzahl von n Referenzbereichen (R) $RB_i$ und der Soll-Wärmekarte (S) SW(KB) für diesen Korrekturbereich (K) KB nach $KFM(KB) = f(WD(RB_1), WD(RB_2),... WD(RB_n), SW(KB))$ ermittelt wird,
bevorzugt wobei

- für unterschiedliche Korrekturbereiche (K) unterschiedliche Korrekturfunktionen f verwendet werden und/oder
- eine Korrekturfunktion f zusätzlich von Wärmedaten eines Korrekturbereichs (K) abhängt, der zusätzlich als Referenzbereich (R) festgelegt wurde und/oder
- die Wärmedaten (W) unterschiedlicher Referenzbereiche (R) in einer Korrekturfunktion unterschiedlich gewichtet werden.

5. Verfahren gemäß einem der vorstehenden Ansprüche, wobei Formbereiche einer Gruppe von Formbereichen in unterschiedlichen Schichten (S1, S2, S3) liegen, wobei insbesondere Referenzbereiche (R) dieser Formbereiche in unterschiedlichen Schichten (S1, S2, S3) liegen, und eine Anzahl von Korrekturfaktor-Modulen (F) für Korrekturbereiche (K) einer aktuellen Schicht (S1, S2, S3) basierend auf Wärmedaten (W) eines Referenzbereichs (R) derselben Gruppe von Formbereichen einer darunterliegenden Schicht (S1, S2, S3) generiert werden,
bevorzugt wobei eine Anzahl von Objekten (2) in unterschiedlichen Höhen angeordnet ist, bevorzugt wobei ein Korrekturfaktor-Modul (F) für einen Korrekturbereich (K) in Abhängigkeit von der Höhe eines Referenzbereichs (R) und/oder des Korrekturbereichs (K) generiert wird.

6. Verfahren gemäß einem der vorstehenden Ansprüche, wobei ein Korrekturfaktor-Modul (F) für einen Korrekturbereich (K) in Abhängigkeit

- von der Reihenfolge der Verfestigung der Korrekturbereiche (K) und/oder
- von der Position des Korrekturbereichs (K) und/oder
- von Stützstrukturen des Korrekturbereichs (K) und/oder
- von einem Zeitintervall zwischen zwei sukzessiven Belichtungen eines betreffenden Objekts

generiert wird.

7. Verfahren gemäß einem der vorstehenden Ansprüche, wobei ein Korrekturfaktor-Modul (F) aus anderen Korrekturfaktor-Modulen (F) ermittelt wird, bevorzugt durch Mittelwertbildung, die vorzugsweise gewichtet ist.

8. Verfahren gemäß einem der vorstehenden Ansprüche, wobei ein Korrekturbereich (K) bei seiner Verfestigung zur Generierung eines Korrekturfaktor-Moduls (F) als Referenzbereich (R) ausgewählt wird, Wärmedaten (W) dieses Referenzbereichs (R) aufgenommen werden und diese Wärmedaten (W) in eine Generierung einer Anzahl von Korrekturfaktor-Modulen (F) zur Verfestigung anderer Korrekturbereiche (K) verwendet wird.

9. Verfahren gemäß einem der vorstehenden Ansprüche, wobei Korrekturbereichen (K), insbesondere in unterschiedlichen Reihen auf einem Baufeld (8), unterschiedliche Soll-Wärmekarten (S) zugeordnet werden und/oder wobei für diese Korrekturbereiche (K) unterschiedliche Korrekturfaktor-Module (F) verwendet werden,
bevorzugt wobei die Zuordnung einer Soll-Wärmekarte (S) zu einem Korrekturbereich (K) und/oder die Verwendung eines Korrekturfaktor-Moduls (F) für einen Korrekturbereich (K) von einer Gastromrichtung und/oder Gasverteilung und/oder einer Temperaturverteilung der Umgebung und/oder von einer Wärmeverteilung oder -ableitung im Objekt abhängt.

10. Verfahren gemäß einem der vorstehenden Ansprüche, wobei das Generieren eines Korrekturfaktor-Moduls (F) auf unterschiedlichen Korrekturfunktionen basiert und auf Wärmedaten (W) eines Referenzbereichs (R), der ein verfestigter Korrekturbereich (K) ist, wobei ein Korrekturfaktor-Modul (F) bevorzugt mit den folgenden Schritten generiert wird:

- Unterteilen einer Anzahl von Korrekturbereichen (K) in eine Anzahl von Normalbereiche, in denen die Wärmedaten (W) in einem vorgegebenen Wertebereich um einen dort entsprechenden Wert der Soll-Temperaturkarte (S) liegen, und in eine Anzahl von Sonderbereiche, in denen die Wärmedaten (W) außerhalb des Wertebereichs liegen,
- Generieren des Korrekturfaktor-Moduls (F) dermaßen, dass eine erste Korrekturfunktion für die Anzahl von Normalbereichen verwendet wird und eine zweite Korrekturfunktion für die Anzahl von Sonderbereichen, wobei sich die erste Korrekturfunktion und die zweite Korrekturfunktion voneinander unterscheiden.

11. Regelvorrichtung (31) zur Regelung einer Bestrahlung in einem Fertigungsverfahren zur additiven Fertigung von Objekten (2), wobei in einem Baufeld (8) Aufbaumaterial schichtweise in Form von Objektschichten (O), entsprechend Querschnitten der zu fertigenden Objekte (2), mittels Bestrahlung des Aufbaumaterials verfestigt wird, die Regelvorrichtung (31) umfassend:

- eine Vorgabe-Einheit (32) ausgelegt zum

i) Festlegen einer Mehrzahl von einander in Form und/oder Größe entsprechenden Formbereichen in den zu verfestigenden Objektschichten (O),
ii) Auswahl einer Anzahl von Referenzbereichen (R) aus der Mehrzahl der Formbereiche, wobei die übrigen Formbereiche als Korrekturbereiche (K) definiert werden,
iii) Festlegen einer Anzahl von Soll-Wärmekarten (S) welche eine gewünschte Wärmeverteilung von Korrekturbereichen (K) oder einer Anzahl von Gruppen von Korrekturbereichen (K) vorgeben,

- eine Sensoreinheit (18) ausgelegt zum Aufnehmen von ortsaufgelösten Wärmedaten (W) der Anzahl von Referenzbereichen (R) bei ihrer Verfestigung,
- eine Korrekturmodul-Einheit (33) ausgelegt zum Generieren einer Anzahl von Korrekturfaktor-Modulen (F) für die Korrekturbereiche (K) aus den Wärmedaten (W) und den Soll-Wärmekarten (S), wobei jedes Korrekturfaktor-Modul (F) ortsaufgelöste Korrekturfaktoren für Bestrahlungswerte oder ortsaufgelöste korrigierte Bestrahlungswerte angibt und jedem Korrekturbereich (K) ein Korrekturfaktor-Modul (F) zugeordnet ist,
- eine Steuerdateneinheit (34) ausgelegt zum Erzeugen und Ausgeben von Steuerdaten zum Verfestigen zumindest der Korrekturbereiche (K) basierend auf dem ihnen jeweils zugeordneten Korrekturfaktor-Modul (F).

12. Regelvorrichtung (31) nach Anspruch 11, umfassend ein maschinenlernfähiges Modell (M), welches gemäß einem Verfahren nach Anspruch 10 trainiert worden ist.

13. Steuereinrichtung (30) für eine Fertigungsvorrichtung (1) zur zur additiven Fertigung von Objekten (2), wobei die Steuereinrichtung (30) eine Regelvorrichtung (31) nach Anspruch 11 oder 12 umfasst und/oder dazu ausgebildet ist, die Fertigungsvorrichtung (1) gemäß einem Verfahren nach einem der Ansprüche 1 bis 10 anzusteuern.

14. Fertigungsvorrichtung (1) zur additiven Fertigung zumindest eines Objekts (2) in einem additiven Fertigungsprozess umfassend zumindest

- eine Bestrahlungsvorrichtung, um Aufbaumaterial durch Bestrahlung mit zumindest einem Energiestrahl schichtweise zu verfestigen, und
- eine Steuereinrichtung (30) nach Anspruch 13.

**15.** Computerprogrammprodukt, umfassend Befehle, die bei der Ausführung des Programms durch einen Computer diesen veranlassen, die Schritte des Verfahrens nach einem der Ansprüche 1 bis 10 auszuführen.

FIG 1

# FIG 2

# FIG 3

# FIG 4

# FIG 5

# FIG 6

# FIG 7

**Europäisches Patentamt**
**European Patent Office**
**Office européen des brevets**

# EUROPÄISCHER RECHERCHENBERICHT

**Nummer der Anmeldung**

**EP 23 21 4421**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2017 118831 A1 (EOS GMBH ELECTRO OPTICAL SYSTEMS [DE]; MTU AERO ENGINES AG [DE]) 21. Februar 2019 (2019-02-21) * Absätze [0014], [0034], [0066], [0081]; Ansprüche 1, 11, 14 * | 1-15 | INV. B29C64/153 B22F10/31 B22F10/36 B22F10/85 B29C64/393 |
| A | EP 3 434 450 A1 (CL SCHUTZRECHTSVERWALTUNGS GMBH [DE]) 30. Januar 2019 (2019-01-30) * Ansprüche 1, 14 * | 1-15 | B33Y10/00 B33Y30/00 B33Y50/02 |

**RECHERCHIERTE SACHGEBIETE (IPC)**

B29C
C22C
B22F
B33Y

Der vorliegende Recherchenbericht wurde für alle Patentansprüche erstellt

| Recherchenort | Abschlußdatum der Recherche | Prüfer |
|---|---|---|
| Den Haag | 9. April 2024 | Schmitt, Sebastian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 21 4421

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-04-2024

| Im Recherchenbericht angeführtes Patentdokument | Datum der Veröffentlichung | Mitglied(er) der Patentfamilie | Datum der Veröffentlichung |
|---|---|---|---|
| DE 102017118831 A1 | 21-02-2019 | CN 111356962 A | 30-06-2020 |
| | | DE 102017118831 A1 | 21-02-2019 |
| | | EP 3669243 A1 | 24-06-2020 |
| | | US 2020198010 A1 | 25-06-2020 |
| | | WO 2019034394 A1 | 21-02-2019 |
| EP 3434450 A1 | 30-01-2019 | CN 105828984 A | 03-08-2016 |
| | | DE 102013017792 A1 | 30-04-2015 |
| | | EP 3062991 A1 | 07-09-2016 |
| | | EP 3434450 A1 | 30-01-2019 |
| | | US 2016271884 A1 | 22-09-2016 |
| | | US 2021023620 A1 | 28-01-2021 |
| | | US 2023390997 A1 | 07-12-2023 |
| | | WO 2015062564 A1 | 07-05-2015 |

EPO FORM P0461

Für nähere Einzelheiten zu diesem Anhang : siehe Amtsblatt des Europäischen Patentamts, Nr.12/82